# EUROPEAN PATENT APPLICATION

(11) **EP 4 628 358 A1**
(43) Date of publication of application: **08.10.2025**
(21) Application number: 22966657.3
(22) Date of filing: 01.12.2022
(51) Int. Cl.: B60L 58/26, B60L 58/27

(54) **CONTROL METHOD FOR ELECTRIC VEHICLE AND CONTROL SYSTEM FOR ELECTRIC VEHICLE**

(71) Applicant: Nissan Motor Co., Ltd., Kanagawa 221-0023 (JP)
(72) Inventor: YAMANOUCHI, Akira, Atsugi-shi, Kanagawa 243-0123 (JP)
(74) Representative: Hoefer & Partner Patentanwälte mbB
(86) International application number: PCT/JP2022/044421
(87) International publication number: WO 2024/116377

(57) **Abstract**

A control method for an electric vehicle, the electric vehicle performing power transfer between a drive motor and a battery and limiting charge/discharge power of the battery when a temperature of the battery reaches a predetermined upper limit temperature or is lower than a lower limit temperature lower than the upper limit temperature, the control method including, calculating a load transition representing a change in a load on the battery when the vehicle travels on a travel route from a current location to a destination of the vehicle, by estimating at least, from the travel route, a low load travel route on which the vehicle travels in a state in which the load on the battery is a low load and a high load travel route on which the vehicle travels in a state in which the load is a high load greater than the low load, calculating a temperature transition of the battery based on the load transition and a current temperature of the battery, heating the battery before the load becomes the high load state in a case where it is predicted that the temperature of the battery is lower than the lower limit temperature when the load shifts from the low load state to the high load state, and cooling the battery before the load becomes the high load state in a case where it is predicted that the temperature of the battery reaches the upper limit temperature when the load is in the high load state.

## Description

### TECHNICAL FIELD

The present invention relates to a control method for an electric vehicle and a control system for an electric vehicle.

### BACKGROUND ART

JP4765298B discloses contents of implementing reserved cooling control for lowering a temperature in advance when it is predicted that a temperature of a battery becomes equal to or higher than an appropriate temperature from a travel route of a vehicle.

### SUMMARY OF INVENTION

When a temperature of a battery reaches a predetermined upper limit temperature, charge/discharge power of the battery is limited to prevent a failure of the battery. In addition, when the temperature of the battery is lower than a predetermined lower limit temperature, the charge/discharge power of the battery is limited to reduce charge/discharge capability of the battery. Thus, in a case where a high load is required for the battery when the charge/discharge power of the battery is limited, an input/output desired by a driver may not be obtained.

Therefore, an object of the present invention is to provide a control method for an electric vehicle and a control system for an electric vehicle that reduce input and output shortages when a high load is required for a battery.

According to an aspect of the present invention, there is provided a control method for an electric vehicle, the electric vehicle performing power transfer between a drive motor and a battery and limiting charge/discharge power of the battery when a temperature of the battery reaches a predetermined upper limit temperature or is lower than a lower limit temperature lower than the upper limit temperature. The control method includes: calculating a load transition representing a change in a load on the battery when the vehicle travels on a travel route from a current location to a destination of the vehicle, by estimating at least, from the travel route, a low load travel route on which the vehicle travels in a state in which the load on the battery is a low load and a high load travel route on which the vehicle travels in a state in which the load is a high load greater than the low load; and calculating a temperature transition of the battery based on the load transition and a current temperature of the battery. The control method further includes: heating the battery before the load becomes the high load state in a case where it is predicted that the temperature of the battery is lower than the lower limit temperature when the load shifts from the low load state to the high load state; and cooling the battery before the load becomes the high load state in a case where it is predicted that the temperature of the battery reaches the upper limit temperature when the load is in the high load state.

### BRIEF DESCRIPTION OF DRAWINGS

[FIG. 1] FIG. 1 is a block diagram illustrating a configuration of a vehicle to which a control system for an electric vehicle according to the present embodiment is applied.
[FIG. 2] FIG. 2 is a block diagram of the control system for an electric vehicle according to the present embodiment.
[FIG. 3] FIG. 3 illustrates a relationship between a temperature of a battery and an allowable input/output of the battery.
[FIG. 4] FIG. 4 illustrates a relationship between a state of charge (SOC) of the battery and an allowable input of the battery.
[FIG. 5] FIG. 5 illustrates a relationship between the state of charge (SOC) of the battery and an allowable output of the battery.
[FIG. 6] FIG. 6 is a flowchart (S101 to S109) when the vehicle enters a high load output travel route in the control system for an electric vehicle according to the present embodiment.
[FIG. 7] FIG. 7 is a flowchart (S110 to S121) before the vehicle enters a regenerative braking travel route or the vehicle arrives at a charging point in the control system for an electric vehicle according to the present embodiment.
[FIG. 8] FIG. 8 is a time chart when the control system for an electric vehicle according to the present embodiment predicts that the vehicle enters the high load output travel route and heats the battery in advance.
[FIG. 9] FIG. 9 is a time chart when the control system for an electric vehicle according to the present embodiment predicts that the temperature of the battery reaches an upper limit temperature while the vehicle is traveling on the high load output travel route and cools the battery in advance.
[FIG. 10] FIG. 10 is a time chart when the control system for an electric vehicle according to the embodiment predicts that the vehicle enters the regenerative braking travel route and heats the battery in advance.
[FIG. 11] FIG. 11 is a time chart when the control system for an electric vehicle according to the present embodiment predicts that the temperature of the battery reaches an upper limit temperature while the vehicle is traveling on the regenerative braking travel route and cools the battery in advance.
[FIG. 12] FIG. 12 is a time chart when the control system for an electric vehicle according to the present embodiment predicts that the vehicle arrives at the charging point and charges the battery, and heats the battery in advance.
[FIG. 13] FIG. 13 is a time chart when the control system for an electric vehicle according to the present embodiment predicts that the temperature of the battery reaches a set temperature during charging of the battery and cools the battery in advance.
[FIG. 14] FIG. 14 is a flowchart (S201 to S215) when the battery is charged and then the vehicle travels in the control system for an electric vehicle according to the present embodiment.
[FIG. 15] FIG. 15 is a time chart when the vehicle travels on a low load travel route and arrives at a destination after the battery is charged in the control system for an electric vehicle according to the present embodiment.

### DESCRIPTION OF EMBODIMENTS

### [Configuration of Vehicle 100]

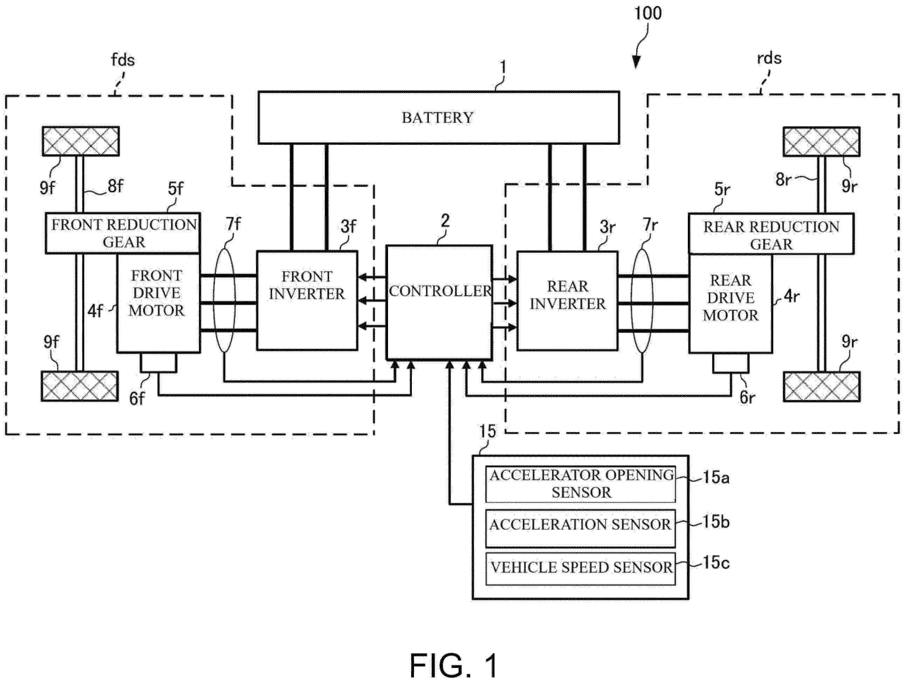

FIG. 1 is a block diagram illustrating a configuration of a vehicle 100 to which a control system for an electric vehicle according to the present embodiment is applied. The vehicle 100 is an electric vehicle. The electric vehicle refers to a vehicle that includes a drive motor (hereinafter, simply referred to as a motor 4) as a drive source and travels by generating a driving force due to a torque generated by the motor 4 on one or a plurality of wheels. For this reason, the electric vehicle includes not only an electric automobile but also a hybrid vehicle using both the motor 4 and an engine as the drive source. For example, the electric vehicle includes a hybrid vehicle in which the motor 4 is used as a drive source of one of a front wheel and a rear wheel and an engine is used as a drive source of the other. A four-wheel-drive vehicle refers to a vehicle that uses four wheels as drive wheels 9. The four-wheel-drive vehicle includes, in addition to a vehicle that normally uses four wheels as drive wheels 9, a vehicle that can be switched between a so-called two-wheel drive, which is front-wheel drive or rear-wheel drive, and four-wheel drive. In addition, in the four-wheel-drive vehicle, some of the four wheels can be controlled as drive wheels 9 in conjunction with each other, and the four wheels may be controlled as drive wheels 9 that drive independently. Therefore, the electric four-wheel-drive vehicle in the present embodiment refers to the vehicle 100 that travels by generating a driving force due to a torque generated by the motor 4 on some or all of the four wheels.

As illustrated in FIG. 1, the vehicle 100 is an electric four-wheel-drive vehicle, but may be an electric two-wheel-drive vehicle by only front-wheel drive or only rear-wheel drive. The vehicle 100 includes a front drive system fds, a rear drive system rds, a battery 1, and a controller 2 (control unit).

The front drive system fds receives power supplied from the battery 1 and drives front wheels 9f under the control of the controller 2. The front drive system fds includes a front inverter 3f, a front drive motor 4f, a front reduction gear 5f, a front rotation sensor 6f, a front drive shaft 8f, the front wheels 9f, and the like. The subscript f indicates a configuration on the front side. The front wheels 9f are a pair of wheels located relatively in a front direction of the vehicle 100 among the four wheels of the vehicle 100. The front direction of the vehicle 100 is a predetermined direction formally determined in accordance with a direction of a seat of a driver or the like. In the front drive system fds, the front wheels 9f function as the drive wheels 9 that generate a driving force of the vehicle 100.

The rear drive system rds receives power supplied from the battery 1 and drives rear wheels 9r under the control of the controller 2. The rear drive system rds includes a rear inverter 3r, a rear drive motor 4r, a rear reduction gear 5r, a rear rotation sensor 6r, a rear drive shaft 8r, and the rear wheels 9r, symmetrically arranged with respect to the front drive system fds. The subscript r indicates a configuration on the rear side. The rear wheels 9r are a pair of wheels located relatively in a rear direction of the vehicle 100 among the four wheels of the vehicle 100. The rear direction of the vehicle 100 refers to a direction opposite to the front direction of the vehicle 100. In the rear drive system rds, the rear wheels 9r function as the drive wheels 9 that generate a driving force of the vehicle 100.

The battery 1 is connected to the motor 4 via the inverter 3, and supplies drive power to the motor 4 by discharging. The battery 1 also can be charged by receiving regenerative power from the motor 4. In the front drive system fds, the battery 1 is connected to the front drive motor 4f via the front inverter 3f. Similarly, in the rear drive system rds, the battery 1 is connected to the rear drive motor 4r via the rear inverter 3r.

The controller 2 is a control device of the vehicle 100, and is a computer including a central processing unit (CPU), a read-only memory (ROM), a random access memory (RAM), an input/output interface (I/O interface), and the like. The controller 2 generates control signals for controlling the front drive motor 4f and the rear drive motor 4r based on vehicle variables of the vehicle 100. The vehicle variable is information indicating an operation state or a control state of the entire vehicle 100 or each unit constituting the vehicle 100, and can be obtained by detection, measurement, calculation, or the like. The vehicle variables include, for example, an accelerator opening APO, a longitudinal G and a lateral G, a vehicle speed V, a gradient value, a steering angle, a wheel speed, rotation speeds Nmf and Nmr of the motors 4f and 4r, three-phase alternating currents, which will be described later, and the like. The controller 2 controls the front drive motor 4f and the rear drive motor 4r using these vehicle variables.

The front inverter 3f and the rear inverter 3r convert a direct current supplied from the battery 1 into an alternating current by turning on/off switching elements according to a drive signal generated by the controller 2, and adjust currents supplied to the front drive motor 4f and the rear drive motor 4r, respectively. Each of the inverters 3f and 3r inversely converts alternating currents generated by the front drive motor 4f and the rear drive motor 4r into direct currents by a regenerative braking force, respectively, and adjusts the current supplied to the battery 1.

The front drive motor 4f and the rear drive motor 4r are, for example, three-phase AC motors, and generate a driving force (torque T) by the alternating current supplied from the inverter 3 connected thereto. The driving force generated by the front drive motor 4f is transmitted to the front wheels 9f via the front reduction gear 5f and the front drive shaft 8f. Similarly, the driving force generated by the rear drive motor 4r is transmitted to the rear wheels 9r via the rear reduction gear 5r and the rear drive shaft 8r. The front drive motor 4f and the rear drive motor 4r generate a regenerative braking force when being rotated along with the front wheels 9f and the rear wheels 9r, respectively, and recover kinetic energy of the vehicle 100 as electric energy. The front drive motor 4f constitutes a drive source (front drive source) that drives the front wheels 9f. Similarly, the rear drive motor 4r constitutes a drive source (rear drive source) that drives the rear wheels 9r independently of the front wheels 9f.

Each of the front reduction gear 5f and the rear reduction gear 5r includes, for example, a plurality of gears. Each of the reduction gears 5f and 5r reduces the rotation speed Nm of the motor 4 connected thereto and transmits the reduced rotation speed Nm to the drive shaft 8, thereby generating a driving torque or a braking torque proportional to a reduction ratio. Each of the front rotation sensor 6f and the rear rotation sensor 6r detects a rotor phase of the motor 4 connected thereto, and outputs the detected rotor phase to the controller 2. The controller 2 detects the rotation speed Nmf of the front drive motor 4f based on the output of the front rotation sensor 6f, and detects the rotation speed Nmr of the rear drive motor 4r based on the output of the rear rotation sensor 6r. Each of a front current sensor 7f and a rear current sensor 7r detects a current flowing through the motor 4 connected thereto, and outputs the detected current to the controller 2. In the present embodiment, the current sensors 7f and 7r detect three-phase alternating currents of the motors 4f and 4r, respectively.

The vehicle 100 includes various sensors 15 in addition to the front rotation sensor 6f, the front current sensor 7f, the rear rotation sensor 6r, and the rear current sensor 7r described above. The various sensors 15 include, for example, an accelerator opening sensor 15a, an acceleration sensor 15b, a vehicle speed sensor 15c, a gradient sensor, a steering angle sensor, a wheel speed sensor, and the like. The accelerator opening sensor 15a detects the accelerator opening APO which is an accelerator operation amount. The acceleration sensor 15b detects accelerations in a longitudinal direction and a lateral direction of the vehicle 100, that is, the longitudinal G and the lateral G. The vehicle speed sensor 15c detects the vehicle speed V of the vehicle 100. The vehicle speed V is a moving speed of the entire vehicle body of the vehicle 100, that is, a vehicle body speed. The gradient sensor detects a gradient value which is a traveling road gradient of the vehicle 100. The steering angle sensor detects a steering angle of a steering wheel. The wheel speed sensor detects a wheel speed of each drive wheel 9. Detection values detected by the various sensors 15 are input to the controller 2.

In the vehicle 100, a target driving torque T_req, which is a required torque by a driver, is distributed to the front wheels 9f and the rear wheels 9r. Therefore, when one of a front torque distribution value RTf which is a torque distribution value RT of the front wheels 9f and a rear torque distribution value RTr which is a torque distribution value RT of the rear wheels 9r is determined, the other is also determined, and as a result, the torque distribution of the front and rear wheels 9f and 9r is also determined. For this reason, the vehicle 100 calculates a rear torque Tr, which is the torque T of the rear drive motor 4r, based on a driving state represented by a first parameter such as the longitudinal G as described later. Thus, the rear torque distribution value RTr can be calculated, and the torque distribution control of the front and rear wheels 9f and 9r is performed by substantially calculating the rear torque distribution value RTr.

### [Configuration of Control System]

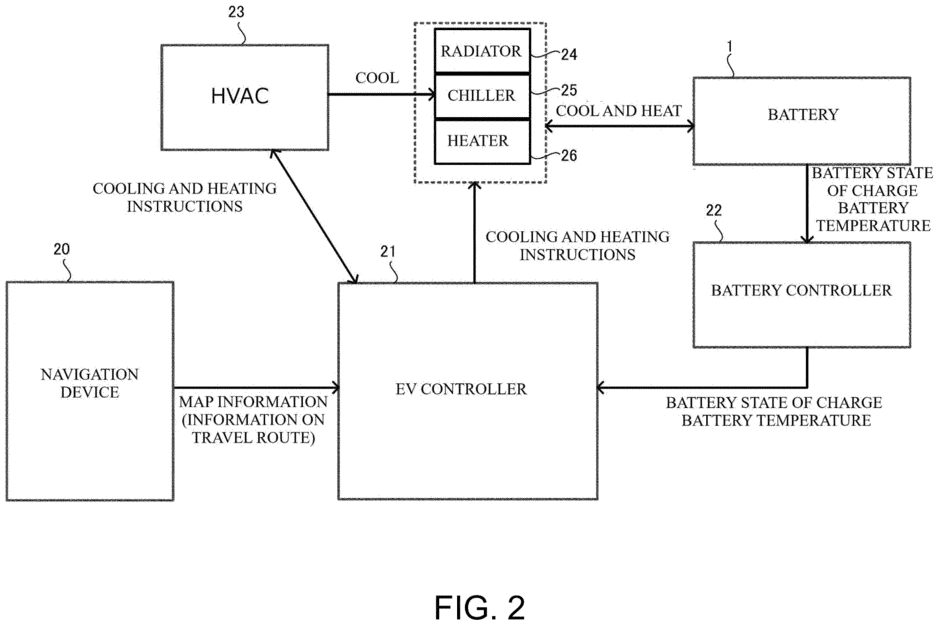

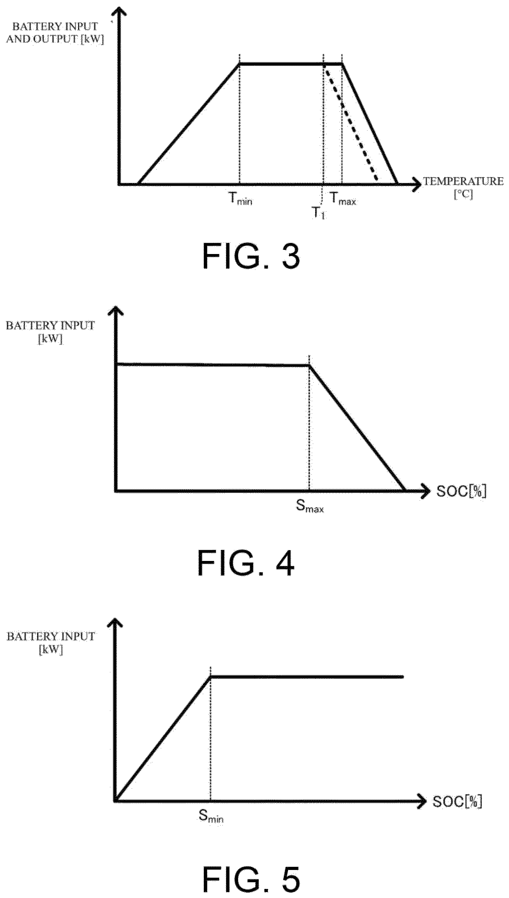

FIG. 2 is a block diagram of the control system for an electric vehicle according to the present embodiment. FIG. 3 illustrates a relationship between a temperature of the battery 1 and input and output characteristics of the battery 1. FIG. 4 illustrates a relationship between a state of charge (SOC) of the battery 1 and input characteristics of the battery 1. FIG. 5 illustrates a relationship between the state of charge (SOC) of the battery 1 and output characteristics of the battery 1.

The control system for an electric vehicle according to the present embodiment includes a navigation device 20, an EV controller 21, a battery controller 22, an air conditioning device 23 (HVAC: Heating Ventilation Air Conditioning), a cooling device (chiller 25 and radiator 24), and a heater 26.

The air conditioning device 23 includes with an air conditioner that performs air conditioning in a vehicle interior and an air conditioner heat exchanging circuit that circulates a refrigerant (for example, alternative fluorocarbon such as HFC134a) for heat exchange. The air conditioner heat exchanging circuit includes a compressor that compresses a refrigerant gas and discharges a high-temperature and high-pressure compressed refrigerant gas, a condenser that performs heat exchange between the compressed refrigerant gas and outside air to dissipate heat of the compressed refrigerant gas to the outside air to cool and condense the compressed refrigerant gas into a liquid refrigerant, an expansion valve that expands the high-pressure liquid refrigerant into a low-pressure and low-temperature liquid refrigerant, and an evaporator that performs heat exchange between the liquid refrigerant and air in the vehicle interior to absorb heat of the air in the vehicle interior so as to cool the air in the vehicle interior and evaporate the liquid refrigerant into a refrigerant gas.

Regarding the battery 1, a first circulation circuit (not illustrated) that circulates a refrigerant (water) for cooling the battery 1 through the chiller 25 and a second circulation circuit (not illustrated) that circulates a refrigerant (water) for cooling the battery 1 through the radiator 24 are connected to the battery 1 in parallel.

The chiller 25 is connected to, for example, a branch circuit (not illustrated) branched from the air conditioner heat exchanging circuit and a first circulation circuit, and performs heat exchange between a refrigerant (substitute fluorocarbon) circulating through the branch circuit and a refrigerant (water) circulating through the first circulation circuit. When the chiller 25 does not cool the battery 1, the driving of the compressor (not illustrated) of the chiller 25 is stopped.

A drive system circulation circuit (not illustrated) that circulates a refrigerant (water) for cooling the motor 4 and the inverter 3 is attached to the vehicle 100. The radiator 24 is disposed in the drive system circulation circuit, and the radiator 24 exchanges heat between the refrigerant and the outside air. The second circulation circuit branches from the drive system circulation circuit, and the second circulation circuit circulates the refrigerant cooled by the radiator 24 to the battery 1. When the battery 1 is not cooled by the radiator 24, an on-off valve (not illustrated) disposed in the second circulation circuit is closed, or the driving of a circulation pump for circulating the refrigerant is stopped.

The heater 26 is, for example, a positive temperature coefficient (PTC) heater, is disposed so as to be in contact with the battery 1 or a thermal capacity body in contact with the battery 1, and heats the battery 1.

The battery 1 supplies power to the motor 4 as described above, and also supplies power to the compressor (not illustrated) of the chiller 25, the circulation pump (not illustrated) and the on-off valve (not illustrated) of the drive system circulation circuit, and the heater 26.

The navigation device 20 generates map information including information on a travel route from a current location (or a departure location) to a destination (or a via-point) of the vehicle 100, and outputs the map information to the EV controller 21. Information on the current location (departure location) of the vehicle 100 is acquired by, for example, a global positioning system (GPS), and is obtained by matching the current location with a road on the map information of the navigation device 20. The information on the destination is obtained by specifying a destination on the map information by an input operation of the driver. Here, the destination is, for example, a final point of navigation, and is a location where an entire vehicle system stops. Information on the travel route is obtained by the navigation device 20 selecting a route connecting the current location (departure location) and the destination in the map information. The map information (information on the travel route) includes information on a distance to a destination, information on a location of a road constituting the travel route, information on a gradient of the road, information on an altitude difference, traffic information, and the like. The traffic information includes, for example, information on attributes of roads (general roads and highway roads), information on predicted vehicle speeds of roads (legal speed limits, statistical average vehicle speeds), information on charging points (locations, charger outputs, and attributes (general roads, highway roads)), and the like.

The battery controller 22 includes the front inverter 3f and the rear inverter 3r, and controls power transfer between the battery 1 and the motor 4. When a charger (charging plug) disposed at a charging point is inserted into a charging plug socket disposed in the vehicle 100, the battery controller 22 detects the charging plug and charges the battery 1 by supplying an output from the charger to the battery 1. Further, the battery controller 22 detects a state of charge (SOC) and a temperature of the battery 1, and outputs the information to the EV controller 21.

The battery controller 22 monitors the temperature of the battery 1. When the temperature of the battery 1 is higher than a predetermined upper limit temperature (Tₘₐₓ: heat-resistant upper limit temperature of the battery 1) or lower than a lower limit temperature (Tₘᵢₙ: temperature at which an input or an output of the battery 1 starts to decrease), the battery controller 22 limits an allowable input/output [kW] of the battery 1 to protect the battery 1 from deterioration. The battery controller 22 can limit the allowable input [kW] of the battery 1 when the temperature of the battery 1 is higher than a predetermined set temperature (T₁) during charging of the battery 1. Here, the set temperature (T₁) is the same temperature as the upper limit temperature (Tₘₐₓ), or a temperature between the upper limit temperature (Tₘₐₓ) and a first intermediate temperature (T_{mid1}) to be described later.

When the vehicle system is stopped and a temperature of the outside air is equal to or lower than the lower limit temperature (Tₘᵢₙ), the temperature of the battery 1 may be equal to or lower than the lower limit temperature (Tₘᵢₙ). When a high load is applied to the battery 1 for a long time, the temperature of the battery 1 may reach the upper limit temperature.

In addition, in FIG. 3, a magnitude of the allowable input/output between the upper limit temperature (Tₘₐₓ) and the lower limit temperature (Tₘᵢₙ) corresponds to an output of the battery 1 in a high load output travel route or an input of the battery 1 in a regenerative braking travel route to be described later. In FIG. 3, an input characteristic and an output characteristic of the battery 1 are the same, but the battery 1 may have different characteristics.

The battery controller 22 can control the cooling device and the heater 26 so that the temperature of the battery 1 falls within an appropriate temperature range as described later.

As illustrated in FIG. 4, the battery controller 22 monitors the state of charge of the battery 1, and when the state of charge (SOC) of the battery 1 is higher than a predetermined upper limit value (Sₘₐₓ: for example, 80 [%]), the battery controller 22 limits the allowable input [kW] of the battery 1 to prevent the battery 1 from being overcharged.

As illustrated in FIG. 5, the battery controller 22 monitors the state of charge of the battery 1, and when the temperature of the battery 1 is lower than a predetermined lower limit value (Sₘᵢₙ: for example, 20 [%]), the battery controller 22 limits the allowable output [kW] of the battery 1 to prevent the state of charge from becoming zero.

The EV controller 21 includes the controller 2. The EV controller 21 receives the map information including the information on the travel route from the current location (or the departure location) to the destination from the navigation device 20, estimates a low load travel route, a high load travel route (high load output travel route and regenerative braking travel route), and a charging point from the map information, and calculates the information. The information on the charging point includes position information, charger output information, and attribute information (general roads and highway roads).

The low load travel route is, for example, a route along which the vehicle 100 can travel in a state in which a load on the battery 1 is a low load when the vehicle 100 travels at a low vehicle speed on a substantially flat road (for example, a general road) having a road gradient (uphill or downhill) lower than a predetermined inclination angle.

The high load output travel route refers to a case where the battery 1 supplies power to the motor 4, and corresponds to a route along which the vehicle 100 can travel in a state in which the load on the battery 1 is a high load, such as a road (general road and highway road) where an uphill slope having a road gradient larger than a predetermined inclination angle continues for a predetermined distance (for example, 1 kilometer) or more, or a road (in particular, a highway road) where a speed limit or an average vehicle speed is set to a predetermined speed (for example, 100 [km/s]) or more and extends over a predetermined distance (for example, 1 kilometer) or more.

The regenerative braking travel route refers to a case where regenerative power is supplied from the motor 4 to the battery 1, and corresponds to, for example, a route in which large regenerative braking due to the regenerative power is performed on the vehicle 100 when the vehicle 100 travels on a road where a downhill slope having a road gradient larger than a predetermined inclination angle continues for a predetermined distance (for example, 1 kilometer) or more, or a region including a boundary between a highway road and a general road.

The charging point is a facility for charging the battery 1 of the vehicle 100, and the battery 1 is in a high load state during charging.

The EV controller 21 stores information on a plurality of travel routes acquired in the past, and further stores information on a low load travel route, information on a high load output travel route, information on a regenerative braking travel route and information on a charging point that are associated with the information on each travel route.

The EV controller 21 compares a last input travel route with the information on the past travel routes. When there is information, which matches the information on the last input travel route, among the past information on the travel routes, it is also preferable to extract the information on the low load travel route, the information on the high load output travel route, the information on the regenerative braking travel route and the information on the charging point that are associated with the information on the travel route.

Incidentally, there are cases where it is known that the travel route from the current location (or the departure location) to the destination of the vehicle 100 is a monotonous terrain, and it is known that the load (input and output) on the battery 1 is substantially constant. In this case, the EV controller 21 can estimate the low load travel route or the high load output travel route based on a load on the battery 1 at the current location or an average of a load on the battery 1 from the departure location to the current location. Accordingly, a processing load on the EV controller 21 can be reduced.

The EV controller 21 calculates a load transition representing a change in the load on the battery 1 when the vehicle 100 travels on the travel route based on the information on the low load travel route, the high load output travel route, the regenerative braking travel route and the charging point that are arranged along the travel route.

The EV controller 21 calculates a temperature transition of the battery 1 based on the load transition and the current temperature of the battery 1. More specifically, the EV controller 21 predicts, based on a current temperature of the battery 1, a temperature transition of the battery 1 when the vehicle 100 travels a predetermined monitoring distance (for example, 10 [km]) from the current location. Of course, the EV controller 21 may predict the temperature transition of the battery 1 when the vehicle 100 travels from the current location to the destination.

In a case where it is predicted that the temperature of the battery 1 is lower than the lower limit temperature (Tₘᵢₙ) when the load shifts from a low load state to a high load state, the EV controller 21 executes control to heat the battery 1 before the load becomes the high load state.

That is, in a case where it is predicted that the temperature of the battery 1 is lower than the lower limit temperature (Tₘᵢₙ) when the vehicle 100 enters the high load output travel route as described later, the EV controller 21 executes control to heat the battery 1 before the vehicle 100 enters the high load output travel route, thereby reducing an output shortage of the battery 1 (driving force shortage of the vehicle 100).

In a case where it is predicted that the temperature of the battery 1 reaches the upper limit temperature (Tₘₐₓ) when the load state is the high load state, the EV controller 21 executes control to cool the battery 1 before the load becomes the high load state.

That is, in a case where it is predicted that the temperature of the battery 1 reaches the upper limit temperature (Tₘₐₓ) while the vehicle 100 is traveling on the high load output travel route, the EV controller 21 executes control to cool the battery 1 before the vehicle 100 enters the high load output travel route, thereby reducing the output shortage of the battery 1 (driving force shortage of the vehicle 100).

In a case where it is predicted that the temperature of the battery 1 reaches the upper limit temperature (Tₘₐₓ) while the vehicle 100 is traveling on the regenerative braking travel route as described later, the EV controller 21 executes control to cool the battery 1 before the vehicle 100 enters the regenerative braking travel route, thereby reducing a shortage of the input to the battery 1 (shortage of regenerative braking) and improving the state of charge of the battery 1.

In a case where it is predicted that the state of charge (SOC) of the battery 1 reaches the upper limit value (Sₘₐₓ: for example, 80 [%]) while the vehicle 100 is traveling on the regenerative braking travel route as described later, the EV controller 21 executes control to cool the battery 1 before the vehicle 100 enters the regenerative braking travel route, thereby reducing the shortage of the input to the battery 1 (shortage of the regenerative braking) and reducing a frequency at which the temperature of the battery 1 reaches the upper limit temperature (Tₘₐₓ) while the vehicle 100 is traveling on the regenerative braking travel route.

In a case where it is predicted that the temperature of the battery 1 is lower than the lower limit temperature (Tₘᵢₙ) when the vehicle 100 enters the regenerative braking travel route as described later, the EV controller 21 executes control to heat the battery 1 before the vehicle 100 enters the regenerative braking travel route, thereby reducing the shortage of the input to the battery 1 (shortage of the regenerative braking).

In a case where it is predicted that the temperature of the battery 1 is lower than the lower limit temperature (Tₘᵢₙ) when the vehicle 100 arrives at the charging point as described later, the EV controller 21 executes control to heat the battery 1 before the vehicle 100 arrives at the charging point, thereby reducing the shortage of the input to the battery 1 (charging time of the battery 1).

When it is predicted that the temperature of the battery 1 reaches the set temperature (T₁) during charging of the battery 1 as described later, the EV controller 21 executes control to cool the battery 1 before the vehicle 100 arrives at the charging point, thereby reducing the shortage of the input to the battery 1 and shortening the charging time of the battery 1.

The EV controller 21 performs control such that the temperature of the battery 1 falls within an appropriate temperature range that is higher than the lower limit temperature (Tₘᵢₙ) and lower than the upper limit temperature (Tₘₐₓ). When the temperature of the battery 1 becomes equal to or higher than the first intermediate temperature (T_{mid1}) that is between the upper limit temperature (Tₘₐₓ) and the lower limit temperature (Tₘᵢₙ), the EV controller 21 starts cooling the battery 1, and then, when the temperature of the battery 1 becomes equal to or lower than a second intermediate temperature (_{Tmid2}) between the first intermediate temperature (T_{mid1}) and the lower limit temperature (Tₘᵢₙ), the EV controller 21 stops cooling the battery 1. The EV controller 21 may execute control to start cooling the battery 1 when the temperature of the battery 1 becomes equal to or higher than the intermediate temperature (T_{mid}) between the upper limit temperature (Tₘₐₓ) and the lower limit temperature (Tₘᵢₙ), and then stop cooling the battery 1 when the temperature of the battery 1 becomes lower than the intermediate temperature (T_{mid}) .

The EV controller 21 cools the battery 1 by the chiller 25 when the temperature of the outside air is equal to or higher than a predetermined threshold temperature. In this case, the EV controller 21 turns on the compressor of the chiller 25 and closes the on-off valve. The EV controller 21 cools the battery 1 by the radiator 24 when the temperature of the outside air is lower than the threshold temperature. In this case, the EV controller 21 stops the compressor of the chiller 25 and opens the on-off valve (turns on the circulation pump).

The EV controller 21 sets the threshold temperature to be lower as the load on the battery 1 increases, and sets the threshold temperature to be higher as the load decreases.

When it is predicted that the vehicle 100 enters the low load travel route and an end point of the low load travel route is the destination of the vehicle 100, the EV controller 21 stops cooling the battery 1 regardless of the temperature of the battery 1. Accordingly, power consumption is reduced by avoiding the control of cooling the battery 1 by the chiller 25 when the temperature of the outside air is equal to or higher than the threshold temperature.

The charger at the charging point includes a slow charger and a quick charger. The slow charger has, for example, an AC output voltage of 100 [V], converts the output voltage into a DC output voltage of 400 [V] via a charger mounted on the vehicle 100, and supplies the DC output voltage to the battery 1. The quick charger has a DC output voltage of 400 [V] and supplies power at the output voltage directly to the battery 1. In the present embodiment, it is assumed that the charging point in the middle of the travel route is a quick charger, but the same also applies to a slow charger.

### [First Control Flow]

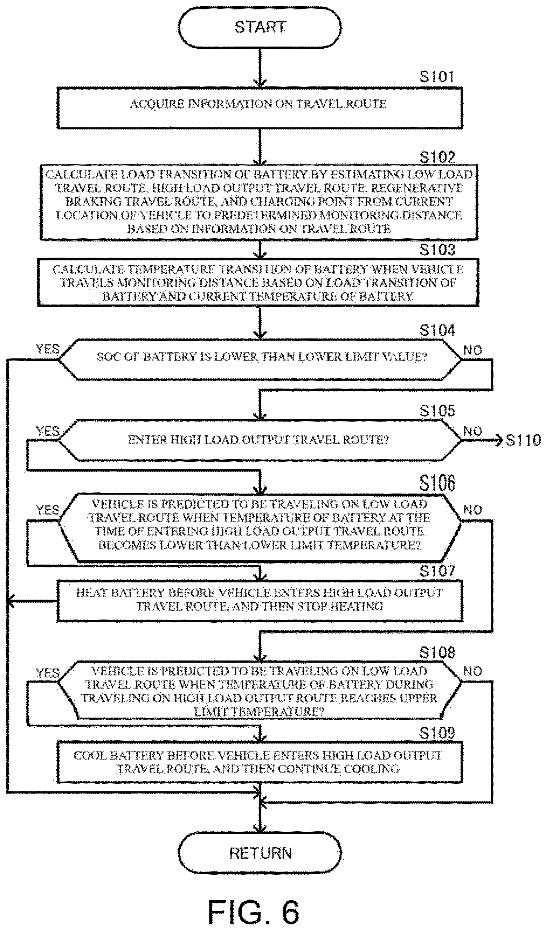

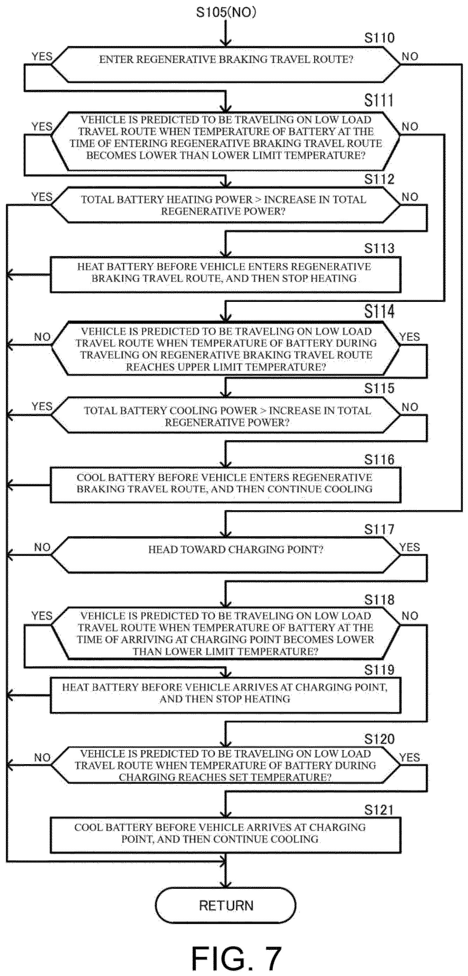

FIG. 6 is a flowchart (S101 to S109) when the vehicle 100 enters a high load output travel route in the control system for an electric vehicle according to the present embodiment. FIG. 7 is a flowchart (S110 to S121) before the vehicle 100 enters a regenerative braking travel route or the vehicle 100 arrives at a charging point in the control system for an electric vehicle according to the present embodiment.

The first control flow is a control flow in a case where the vehicle 100 is traveling on the low load travel route, heats or cools the battery 1 before the vehicle 100 enters the high load output travel route or the regenerative braking travel route, and heats or cools the battery 1 before the vehicle 100 arrives at the charging point. For ease of description, a road on which the vehicle 100 travels first is assumed to be a low load travel route, but in the present invention, the type of the travel route on which the vehicle 100 travels before entering the high load output travel route and the regenerative braking travel route, and the type of the travel route on which the vehicle 100 travels before arriving at the charging point are not limited.

In step S101, the EV controller 21 acquires information on the travel route from the current location (or the departure location) to the destination of the vehicle 100 from the navigation device 20.

In step S102, the EV controller 21 estimates, based on the information on the travel route, information on a low load travel route, information on a high load output travel route, information on a regenerative braking travel route, and information on a charging point from the travel route within a predetermined monitoring distance (for example, 10 [km]) from the current location of the vehicle 100, and calculates a load transition representing a change in a load on the battery 1 when the vehicle 100 travels on the travel route.

In step S103, the EV controller 21 estimates, based on the load transition and the current temperature of the battery 1, a temperature transition of the battery 1 when the vehicle 100 travels a monitoring distance. The temperature transition of the battery 1 is calculated based on, for example, a difference between a time integration of the load transition and a heat dissipation amount based on a temperature difference between the battery 1 and the outside air.

In step S104, the EV controller 21 determines whether the state of charge (SOC) of the battery 1 is lower than the lower limit value (Sₘᵢₙ), and the process proceeds to "RETURN" if YES and proceeds to step S105 if NO.

In step S105, the EV controller 21 calculates whether to enter the high load output travel route, and the process proceeds to step S105 if YES and proceeds to step S110 if NO.

In step S106, the EV controller 21 determines whether the vehicle 100 is predicted to be traveling on the low load travel route in a case where the temperature of the battery 1 is lower than the lower limit temperature (Tₘᵢₙ) when the vehicle 100 enters the high load output travel route, and the process proceeds to step S107 if YES and proceeds to step S108 if NO.

In step S107, the EV controller 21 heats the battery 1 before the vehicle 100 enters the high load output travel route. Thereafter, when the temperature of the battery 1 increases to the lower limit temperature (Tₘᵢₙ) before the vehicle 100 enters the high load output travel route, the EV controller 21 stops heating the battery 1 and proceeds to "RETURN".

In step S108, when the temperature of the battery 1 reaches the upper limit temperature (Tₘₐₓ) while the vehicle 100 is traveling on the high load output travel route, the EV controller 21 determines whether the vehicle 100 is predicted to be traveling on the low load travel route, and the process proceeds to step S109 if YES and proceeds to "RETURN" if NO.

In step S109, the EV controller 21 cools the battery 1 before the vehicle 100 enters the high load output travel route. At this time, a timing at which the cooling of the battery 1 is started is set such that the vehicle 100 enters the high load output travel route at a timing when the temperature of the battery 1 decreases to the lower limit temperature (Tₘᵢₙ). The cooling of the battery 1 is continued even after the vehicle 100 enters the high load output travel route.

In step S110, the EV controller 21 determines whether to enter the regenerative braking travel route, and the process proceeds to step S111 if YES and proceeds to step S117 if NO.

In step S111, the EV controller 21 determines whether the vehicle 100 is predicted to be traveling on the low load travel route in a case where the temperature of the battery 1 is lower than the lower limit temperature (Tₘᵢₙ) when the vehicle 100 enters the regenerative braking travel route, and the process proceeds to step S112 if YES and proceeds to step S114 if NO.

In step S112, the EV controller 21 determines whether a total amount of power (total battery heating power) required to heat the temperature of the battery 1 to the lower limit temperature (Tₘᵢₙ) is larger than a difference (increase in total regenerative power) obtained by subtracting a total amount of regenerative power obtained when the vehicle 100 travels on the regenerative braking travel route without heating the battery 1 before the vehicle 100 enters the regenerative braking travel route from a total amount of regenerative power obtained when the vehicle 100 travels on the regenerative braking travel route after heating the temperature of the battery 1 to the lower limit temperature (Tₘᵢₙ), and the process proceeds to step S113 if NO and proceeds to "RETURN" if YES. When the vehicle 100 travels on a downhill slope, the total amount of regenerative power is calculated based on an inclination angle of the downhill slope, a length (distance) of the downhill slope, a predicted vehicle speed (predicted torque of the motor 4) at which the vehicle 100 travels on the downhill slope, and a temperature transition of the battery 1 when the vehicle 100 travels on the downhill slope.

In step S113, the EV controller 21 heats the battery 1 before the vehicle 100 enters the regenerative braking travel route. Thereafter, when the temperature of the battery 1 increases to the lower limit temperature (Tₘᵢₙ) before the vehicle 100 enters the regenerative braking travel route, the EV controller 21 stops heating the battery 1 and proceeds to "RETURN".

In step S114, when the temperature of the battery 1 reaches the upper limit temperature (Tₘₐₓ) while the vehicle 100 is traveling on the regenerative braking travel route, the EV controller 21 determines whether the vehicle 100 is predicted to be traveling on the low load travel route, and the process proceeds to step S115 if YES and proceeds to "RETURN" if NO.

In step S115, the EV controller 21 determines whether a total amount of power (total battery cooling power) required to cool the temperature of the battery 1 to the lower limit temperature (Tₘᵢₙ) is larger than a difference (increase in total regenerative power) obtained by subtracting a total amount of regenerative power obtained when the vehicle 100 travels on the regenerative braking travel route without cooling the battery 1 before the vehicle 100 enters the regenerative braking travel route from a total amount of regenerative power obtained when the vehicle 100 travels on the regenerative braking travel route after cooling the temperature of the battery 1 to the lower limit temperature (Tₘᵢₙ), and the process proceeds to step S116 if NO and proceeds to "RETURN" if YES.

In step S116, the EV controller 21 cools the battery 1 before the vehicle 100 enters the regenerative braking travel route. At this time, the timing at which the cooling of the battery 1 is started is set such that the vehicle 100 enters the regenerative braking travel route at a timing when the temperature of the battery 1 decreases to the lower limit temperature (Tₘᵢₙ). Even when the vehicle 100 enters the regenerative braking travel route, the cooling of the battery 1 is continued.

In step S117, the EV controller 21 determines whether there is a charging point in a travel destination of an own vehicle, that is, whether the own vehicle heads toward the charging point, based on the information on the travel route, and the process proceeds to step S118 if YES and proceeds to "RETURN" if NO.

In step S118, the EV controller 21 determines whether the vehicle 100 is predicted to be traveling on the low load travel route in a case where the temperature of the battery 1 is lower than the lower limit temperature (Tₘᵢₙ) when the vehicle 100 arrives at the charging point, and the process proceeds to step S119 if YES and proceeds to step S120 if NO.

In step S119, the EV controller 21 heats the battery 1 before the vehicle 100 arrives at the charging point. Thereafter, when the temperature of the battery 1 increases to the lower limit temperature (Tₘᵢₙ) before the vehicle 100 arrives at the charging point, the EV controller 21 stops heating the battery 1 and proceeds to "RETURN".

In step S120, the EV controller 21 refers to the information on the charging point (charger output information), and determines whether the vehicle 100 is predicted to be traveling on the low load travel route when the temperature of the battery 1 reaches the set temperature (T₁) during charging of the battery 1, and the process proceeds to step S121 if YES and proceeds to "RETURN" if NO.

In step S121, the EV controller 21 cools the battery 1 before the vehicle 100 arrives at the charging point. Thereafter, the cooling of the battery 1 is continued after the vehicle 100 arrives at the charging point and starts charging.

### [First Time Chart]

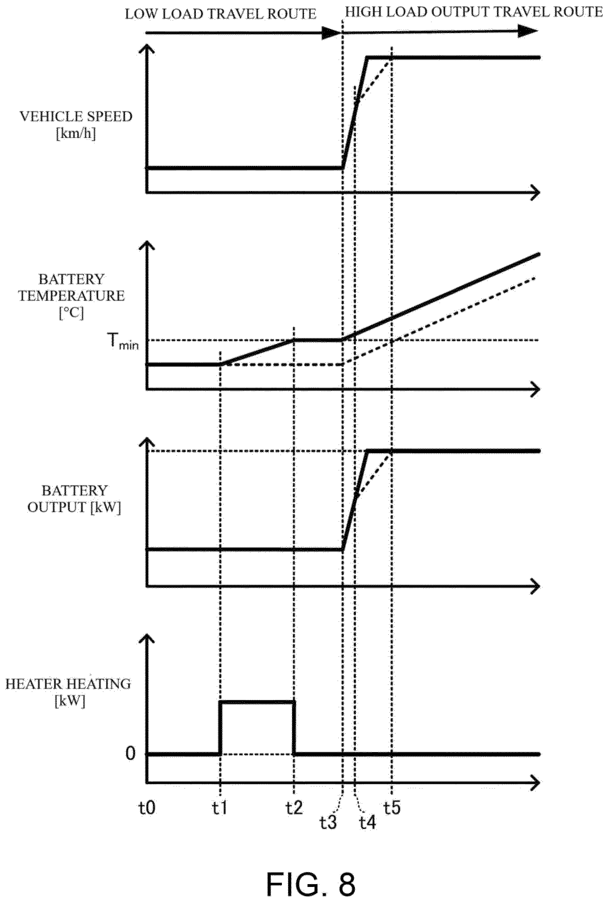

FIG. 8 is a time chart when the control system for an electric vehicle according to the present embodiment predicts that the vehicle 100 enters the high load output travel route and heats the battery 1 in advance. Note that the EV controller 21 predicts the vehicle speed, the temperature of the battery 1, the input and output of the battery 1, and the SOC of the battery 1 indicated by thick dashed lines, including the following figures.

At time t0, the vehicle 100 is traveling on the low load travel route.

In addition, at time t0, the EV controller 21 predicts that the vehicle 100 enters the high load output travel route (for example, a highway road) at time t3, and the temperature (dashed line) of the battery 1 at this time is lower than the lower limit temperature (Tₘᵢₙ).

Therefore, the EV controller 21 starts heating the battery 1 at time t1.

At time t2, the EV controller 21 stops heating the battery 1 when the temperature (solid line) of the battery 1 increases to the lower limit temperature (Tₘᵢₙ).

At time t3, the vehicle 100 enters the high load output travel route, and the output (solid line) of the battery 1 is increased by an accelerator operation of the driver. However, since the temperature of the battery 1 is higher than the lower limit temperature (Tₘᵢₙ) and the output of the battery 1 is not limited, the output (solid line) of the battery 1 and the vehicle speed (solid line) required by the driver can be obtained.

On the other hand, when the battery 1 is not heated in advance (before time t3), the temperature (dashed line) of the battery 1 is lower than the lower limit temperature (Tₘᵢₙ) from time t0 to time t3. When the vehicle enters the high load output travel route at time t3, the output of the battery 1 increases, and thus the temperature (dashed line) of the battery 1 starts to increase. However, at time t4, the output of the battery 1 is limited according to the allowable output (part lower than Tₘᵢₙ) of the battery 1 illustrated in FIG. 3, and therefore, the output (dashed line) and the vehicle speed (dashed line) of the battery 1 are limited and are lower than the output (solid line) and the vehicle speed (solid line) of the battery 1, respectively.

At time t5, the temperature (dashed line) of the battery 1 reaches the lower limit temperature (Tₘᵢₙ), and therefore the limitation on the output to the battery 1 is released. However, it can be seen that between time t4 and time t5, the output of the battery 1 is limited, and the output (dashed line) and the vehicle speed (dashed line) of the battery 1 required by the driver cannot be obtained.

### [Second Time Chart]

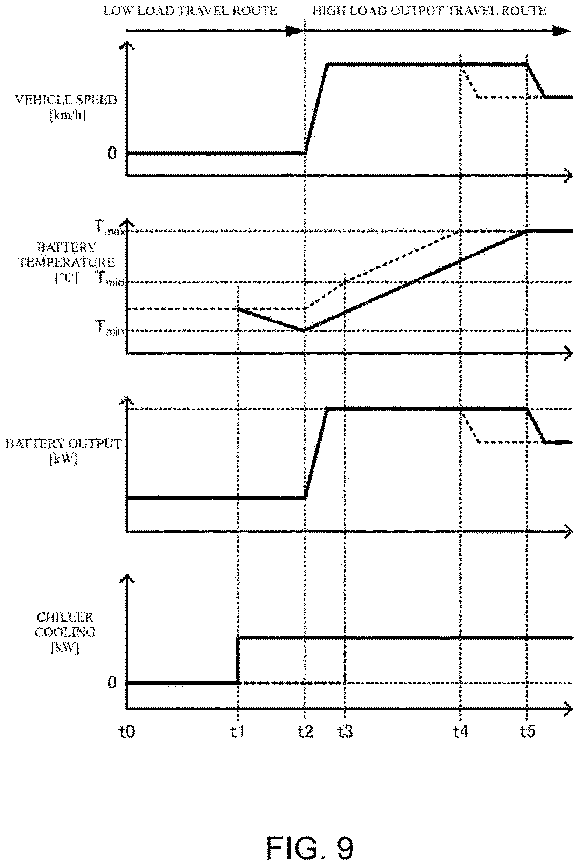

FIG. 9 is a time chart when the control system for an electric vehicle according to the present embodiment predicts that the temperature of the battery 1 reaches an upper limit temperature (Tₘₐₓ) while the vehicle 100 is traveling on the high load output travel route and cools the battery 1 in advance.

At time t0, the vehicle 100 is traveling on the low load travel route. The temperature of the battery 1 is a temperature between the intermediate temperature (T_{mid}) and the lower limit temperature (Tₘᵢₙ).

At time t0, the EV controller 21 predicts the temperature transition of the battery 1, and predicts that at time t2, the vehicle 100 enters the high load output travel route and the output of battery 1 increases, and thus the temperature of battery 1 (dashed line) increases, and at time t3, the chiller 25 (or radiator 24) starts cooling the battery 1 (dashed line), and thus a rate of increase in the temperature of the battery 1 (slope of a line illustrating the temperature of the battery 1 in FIG. 9) becomes slightly slower, but that at time t4, the temperature of the battery 1 reaches the upper limit temperature (Tₘₐₓ), and thus the output of the battery 1 is limited according to the allowable output (part higher than Tₘₐₓ) illustrated in FIG. 3 and the vehicle speed is also limited.

Therefore, at time t1, the EV controller 21 starts cooling the battery 1 by the chiller 25 (or radiator 24) (solid line).

At time t2, the vehicle 100 enters the high load output travel route at the timing when the temperature of the battery 1 decreases to the lower limit temperature (Tₘᵢₙ). At this time, the EV controller 21 continues cooling the battery 1 by the chiller 25 (or radiator 24).

At time t5, when the temperature of the battery 1 reaches the upper limit temperature (Tₘₐₓ), the output and the vehicle speed of the battery 1 are limited according to the allowable output (part higher than Tₘₐₓ) in FIG. 3, but the limitation occurs after time t5, which is later than time t4. Therefore, it can be seen that the output and the vehicle speed of the battery 1 required by the driver on the high load output travel route can be maintained for a longer period of time as compared with the case where the battery 1 is not cooled in advance (before time t2) (dashed line).

In Patent Literature 1, since a cooling start point (operation start timing of a cooling fan) is calculated from a battery temperature and a distance to a point where a charge/discharge amount increases, the battery temperature at this time may be increasing or decreasing. When the operation of the cooling fan is started while the battery temperature is rapidly increasing, a cooling capacity thereof is consumed to suppress the rapid temperature increase. Thus, in order to further decrease the temperature after suppressing the temperature increase, a considerably high cooling capacity is required for the cooling fan. As a result, there is a problem that a large amount of power is consumed, leading to an increase in electricity costs.

However, in the present embodiment, the battery 1 is cooled to a required temperature before the temperature of the battery 1 increases rapidly due to a high load applied to the battery 1, and thus the power consumption can be reduced as compared with the case where the cooling of the battery 1 is started immediately after the temperature increase.

### [Third Time Chart]

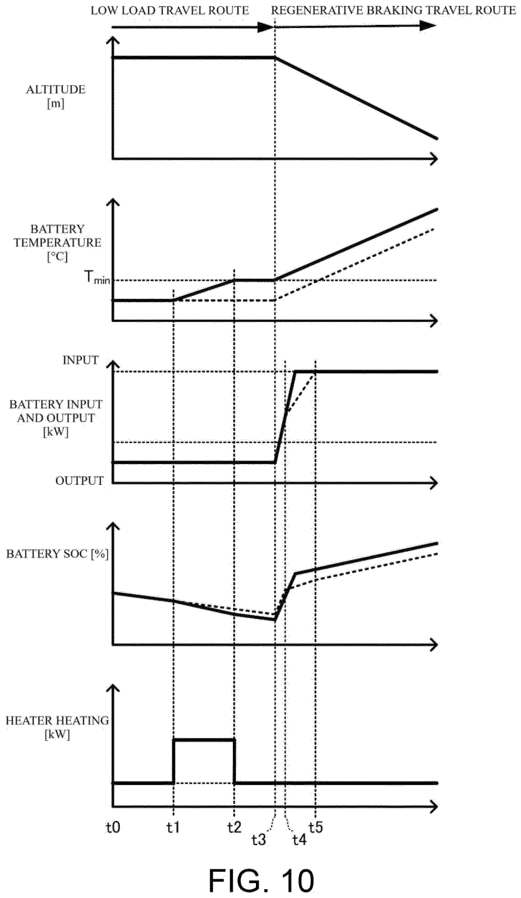

FIG. 10 is a time chart when the control system for an electric vehicle according to the embodiment predicts that the vehicle 100 enters the regenerative braking travel route and heats the battery 1 in advance.

At time t0, the vehicle 100 travels on the low load travel route (or high load output travel route).

At time t0, the EV controller 21 predicts that at time t3, the vehicle 100 enters the regenerative braking travel route (the vehicle 100 travels on a downhill slope while applying regenerative braking) and the temperature (dashed line) of the battery 1 at this time is lower than the lower limit temperature (Tₘᵢₙ).

Therefore, the EV controller 21 starts heating the battery 1 at time t1. The power for heating the battery 1 (power of the heater 26) is provided from the battery 1.

At time t2, the EV controller 21 stops heating the battery 1 when the temperature (solid line) of the battery 1 increases to the lower limit temperature (Tₘᵢₙ).

From time t1 to time t2, the state of charge (solid line) of the battery 1 becomes lower over time than the state of charge (dashed line) of the battery 1 when the battery 1 is not heated in advance (before time t3). Since the heating of the battery 1 is stopped at time t2, the state of charge (solid line) of the battery 1 and the state of charge (dashed line) of the battery 1 decrease while maintaining the same interval.

At time t3, when the vehicle 100 enters the regenerative braking travel route, the motor 4 starts supplying regenerative power to the battery 1, and the state of charge (SOC) of the battery 1 increases. The temperature (dashed line) of the battery 1 is lower than the lower limit temperature (Tₘᵢₙ), and the input to the battery 1 is limited by the allowable input (part lower than Tₘᵢₙ) in FIG. 3.

Thus, at time t4, the input (regenerative power) to the battery 1 is limited by the allowable input (portion lower than Tₘᵢₙ) illustrated in FIG. 3, the state of charge (dashed line) of the battery 1 is lower than the state of charge (solid line) of the battery 1, and a difference thereof increases over time.

At time t5, the temperature (dashed line) of the battery 1 increases to the lower limit temperature (Tₘᵢₙ), and thus the limitation on the input to the battery 1 is released. Accordingly, the state of charge (dashed line) of the battery 1 thereafter increases at the same speed as the state of charge (solid line) of the battery 1, but does not exceed the state of charge (solid line) of the battery 1.

A magnitude of the regenerative braking corresponds to a magnitude of the input to the battery 1. Between time t4 and time t5, a magnitude of the regenerative braking (input (dashed line) of the battery 1) when the battery 1 is not heated in advance (before time t3) is smaller than a magnitude of the regenerative braking (input (solid line) of the battery 1) when the battery 1 is heated in advance by the heater 26, and therefore it is necessary to compensate for the shortage by, for example, a friction brake.

### [Fourth Time Chart]

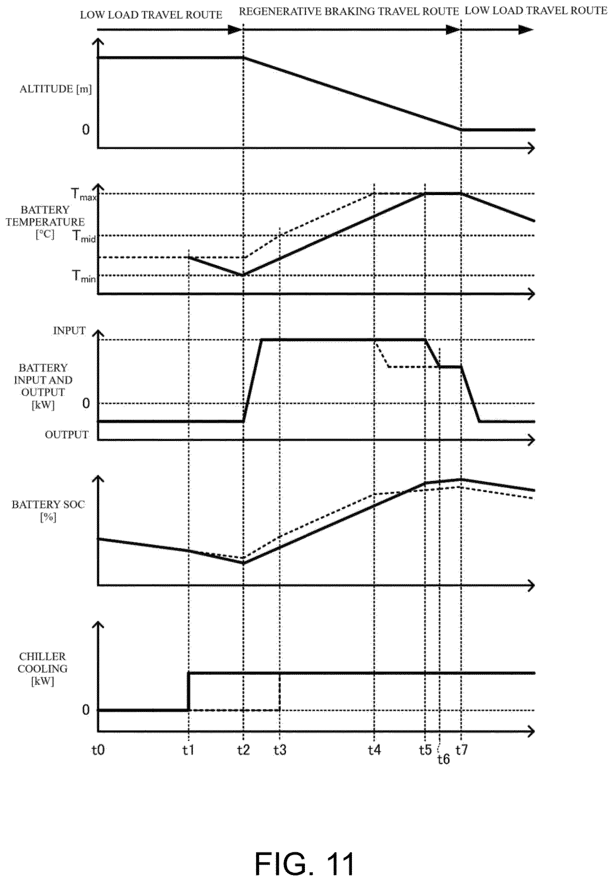

FIG. 11 is a time chart when the control system for an electric vehicle according to the present embodiment predicts that the temperature of the battery 1 reaches an upper limit temperature (Tₘₐₓ) while the vehicle 100 is traveling on the regenerative braking travel route and cools the battery 1 in advance.

At time t0, the vehicle 100 travels on the low load travel route (or high load output travel route). The temperature of the battery 1 is a temperature between the intermediate temperature (T_{mid}) and the lower limit temperature (Tₘᵢₙ).

At time t0, the EV controller 21 predicts a temperature transition and an input transition of the battery 1 as in the following (1) to (3). (1) At time t2, the vehicle 100 enters the regenerative braking travel route and the input to the battery 1 increases, and thus the temperature (dashed line) of the battery 1 increases. (2) At time t3, the chiller 25 (or radiator 24) starts cooling the battery 1 (dashed line), and thus the rate of increase in the temperature of the battery 1 (slope of a line indicating the temperature of the battery 1 in FIG. 11) becomes slightly lower. (3) At time t4, the temperature of the battery 1 reaches the upper limit temperature (Tₘₐₓ), and thus the input to the battery 1 is limited according to the allowable input (part higher than Tₘₐₓ) illustrated in FIG. 3, and the regenerative braking is also limited accordingly.

Therefore, at time t1, the EV controller 21 starts cooling the battery 1 by the chiller 25 (or radiator 24) (solid line).

At time t2, the vehicle 100 enters the regenerative braking travel route at the timing when the temperature of the battery 1 decreases to the lower limit temperature (Tₘᵢₙ). At this time, the EV controller 21 continues cooling the battery 1 by the chiller 25 (or radiator 24).

At time t5, when the temperature of battery 1 reaches the upper limit temperature (Tₘₐₓ), the input to the battery 1 is limited according to the allowable input (part higher than Tₘₐₓ) in FIG. 3, but the limitation occurs after time t5, which is later than time t4. Therefore, the regenerative braking (input to the battery 1 (solid line)) required by the vehicle side on the regenerative braking travel route can be maintained for a longer period of time as compared with the case where the temperature of battery 1 is not cooled in advance (before time t2) (dashed line).

Since the power is supplied to the compressor that circulates the refrigerant through the chiller 25 after time t1, the state of charge (solid line) of the battery 1 when the battery 1 is cooled in advance is lower than the state of charge (dashed line) of the battery 1 when the battery 1 is not cooled in advance.

However, since the input of the battery 1 when the battery 1 is not cooled in advance is limited at time t4, the state of charge (solid line) of the battery 1 is higher than the state of charge (dashed line) of the battery 1 between time t4 and time t5.

After time t5, the state of charge (solid line) of the battery 1 and the state of charge (dashed line) of the battery 1 similarly change, but a difference between the state of charge (solid line) of the battery 1 and the state of charge (dashed line) of the battery 1 is maintained.

In a case where the battery 1 provides the power required to cool the battery 1, that is, the power of the compressor that supplies the refrigerant to the chiller 25, and the allowable input [kW] of the battery 1 is limited to protect the battery 1 from deterioration when the state of charge of the battery 1 is larger than a predetermined upper limit value (Sₘₐₓ: for example, 80 [%]), when it is predicted that the state of charge (SOC) of the battery 1 reaches the upper limit value (Sₘₐₓ) while the vehicle 100 is traveling on the regenerative braking travel route, it is also preferable that the EV controller 21 executes control to cool the battery 1 before the vehicle 100 enters the regenerative braking travel route.

In this case, for example, when the state of charge (SOC) of the battery 1 reaches the upper limit value at time t4 in FIG. 11, the input of the battery 1 is thereafter limited as indicated by the dashed line of "battery input and output" in FIG. 11.

However, by performing cooling of the battery 1 using the chiller 25, for example, at time t1 to reduce the state of charge (SOC) of the battery 1 before the vehicle 100 enters the regenerative braking travel route, the input of the battery 1 is not limited until time t5, for example, as indicated by the solid line of "battery input and output" in FIG. 11.

Thus, by reducing the state of charge of the battery 1 before the vehicle 100 enters the regenerative braking travel route, it is possible to reduce the shortage of the input to the battery 1, that is, the shortage of the regenerative braking from time t4 to time t5. Further, the battery 1 is cooled before the vehicle 100 enters the regenerative braking travel route, and thus it is possible to reduce the frequency at which the temperature of the battery 1 reaches the upper limit temperature (Tₘₐₓ) while the vehicle 100 is traveling on the regenerative braking travel route.

### [Fifth Time Chart]

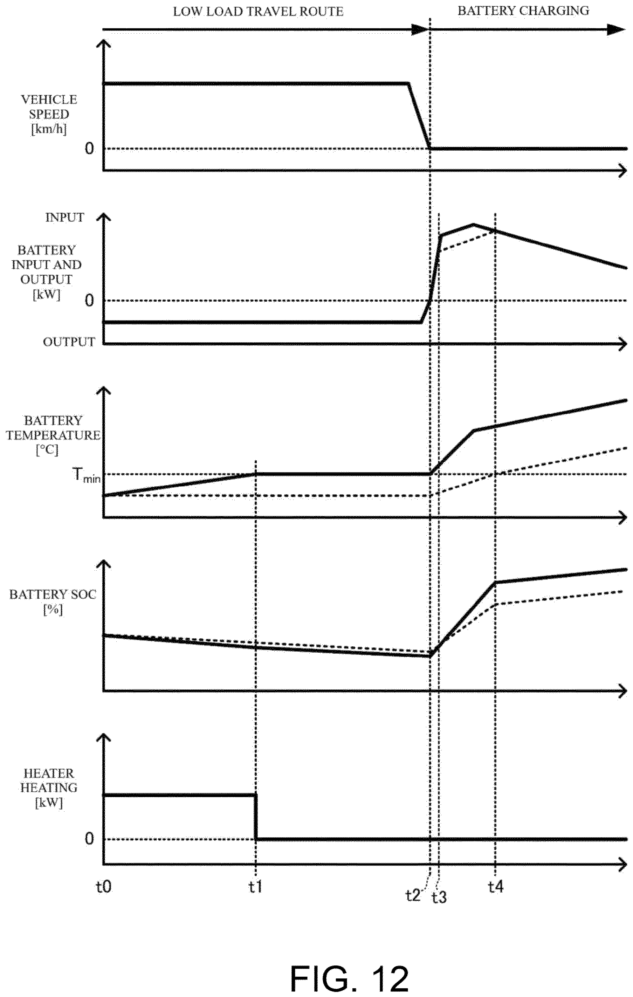

FIG. 12 is a time chart when the control system for an electric vehicle according to the present embodiment predicts that the vehicle 100 arrives at the charging point and charges the battery 1, and heats the battery 1 in advance.

At time t0, the vehicle 100 travels on the low load travel route (which may be the high load output travel route or the regenerative braking travel route) at a predetermined output.

At time t0, the EV controller 21 predicts that the vehicle 100 arrives at the charging point at time t3 and the output becomes zero, but the temperature (dashed line) of the battery 1 at that time is lower than the lower limit temperature (Tₘᵢₙ).

Therefore, the EV controller 21 starts heating the battery 1 at time t0.

At time t1, the EV controller 21 stops heating the battery 1 when the temperature (solid line) of the battery 1 increases to the lower limit temperature (Tₘᵢₙ).

At time t2, the vehicle 100 arrives at the charging point and starts charging (quick charging) the battery 1. Accordingly, the input (solid line) of the battery 1 and the temperature (solid line) of the battery 1 increase. Here, since the temperature of the battery 1 is higher than the lower limit temperature (Tₘᵢₙ) and the input of the battery 1 is not limited, the input (solid line) of the battery 1 required by the vehicle side can be obtained.

On the other hand, when the battery 1 is not heated in advance (before time t2), the temperature (dashed line) of the battery 1 is lower than the lower limit temperature (Tₘᵢₙ) from time t0 to time t2. When the charging of the battery 1 is started at time t2, the input to the battery 1 increases, and thus the temperature (dashed line) of the battery 1 starts to increase. However, at time t3, the input to the battery 1 is limited according to the allowable input (portion lower than Tₘᵢₙ) of the battery 1 illustrated in FIG. 3, and therefore, the input to the battery 1 (dashed line) is limited and becomes lower than the input to the battery 1 (solid line).

At time t4, the temperature (dashed line) of the battery 1 reaches the lower limit temperature (Tₘᵢₙ), and therefore the limitation on the input to the battery 1 is released. However, it can be seen that between time t3 and time t4, the input to the battery 1 is limited, and the input (dashed line) to the battery 1 required by the vehicle side is not obtained, and the charging time of the battery 1 becomes longer accordingly.

### [Sixth Time Chart]

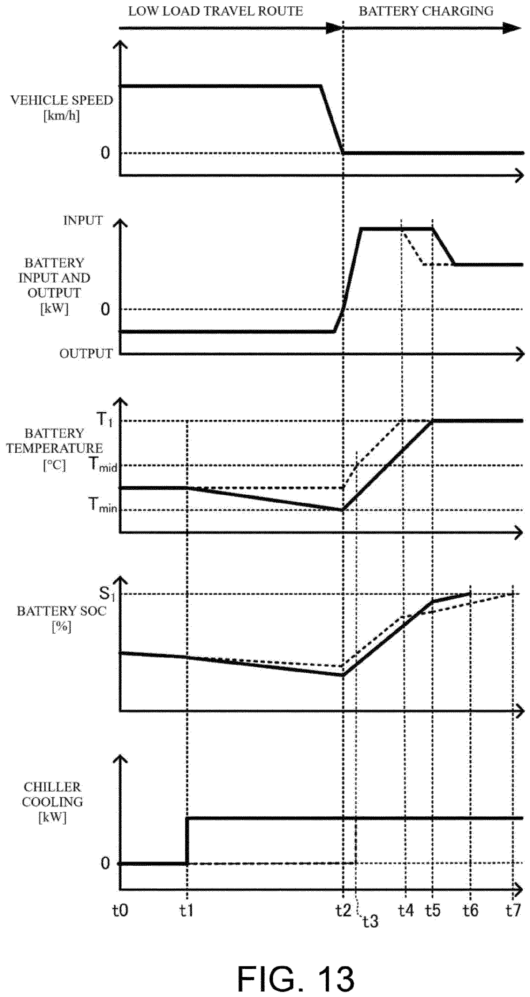

FIG. 13 is a time chart when the control system for an electric vehicle according to the present embodiment predicts that the temperature of the battery 1 reaches a set temperature (T₁) during charging of the battery 1 and cools the battery 1 in advance.

At time t0, the vehicle 100 travels on the low load travel route (which may be the high load output travel route or the regenerative braking travel route). The temperature of the battery 1 is a temperature between the intermediate temperature (T_{mid}) and the lower limit temperature (Tₘᵢₙ).

At t0, the EV controller 21 predicts a temperature transition and an input transition of the battery 1 as illustrated in the following (1) to (3). (1) At time t2, the charging of the battery 1 is started, and the input to the battery 1 increases, and thus the temperature (dashed line) of the battery 1 increases. (2) At time t3, the chiller 25 (or radiator 24) starts cooling the battery 1 (dashed line), and thus the rate of increase in the temperature of the battery 1 (slope of a line indicating the temperature of the battery 1 in FIG. 13) becomes slightly lower. (3) At time t4, the temperature of the battery 1 reaches the set temperature (T₁), and thus the input to the battery 1 is limited according to the allowable input (part (dashed line) higher than Tₘₐₓ) illustrated in FIG. 3, and it is predicted that the charging of the battery 1 is delayed accordingly.

Therefore, at time t1, the EV controller 21 starts cooling the battery 1 by the chiller 25 (or radiator 24) (solid line).

At time t2, the charging of the battery 1 is started at the timing when the temperature of the battery 1 decreases to the lower limit temperature (Tₘᵢₙ). At this time, the EV controller 21 continues cooling the battery 1 by the chiller 25.

At time t5, when the temperature of the battery 1 reaches the set temperature (T₁), the input to the battery 1 is limited according to the allowable input (part (dashed line) higher than T₁) in FIG. 3, but is limited after time t5 later than time t4.

Thus, the state of charge (solid line) of the battery 1 when the battery 1 is cooled in advance (before time t2) is smaller than the state of charge (dashed line) of the battery 1 when the battery 1 is not cooled in advance at time t2.

However, between time t4 and time t5, the increase in the state of charge (dashed line) of the battery 1 is suppressed compared to the state of charge of the battery 1, and the state of charge (solid line) of the battery 1 becomes higher than the state of charge (dashed line) of the battery 1 in the middle.

After time t5, the state of charge (solid line) of the battery 1 and the state of charge (dashed line) of the battery 1 rise at the same speed, but the difference between the state of charge (solid line) of the battery 1 and the state of charge (dashed line) of the battery 1 is maintained.

Therefore, the state of charge (solid line) of the battery 1 when the battery 1 is cooled in advance (before time t2) reaches full charge at time t6, and the state of charge (dashed line) of the battery 1 when the battery 1 is not cooled in advance reaches the full charge (S₁) at time t7 later than time t6. Here, the full charge means that the state of charge of the battery 1 has reached a predetermined state of charge or that a predetermined time has elapsed from the start of charging.

### [Second Control Flow]

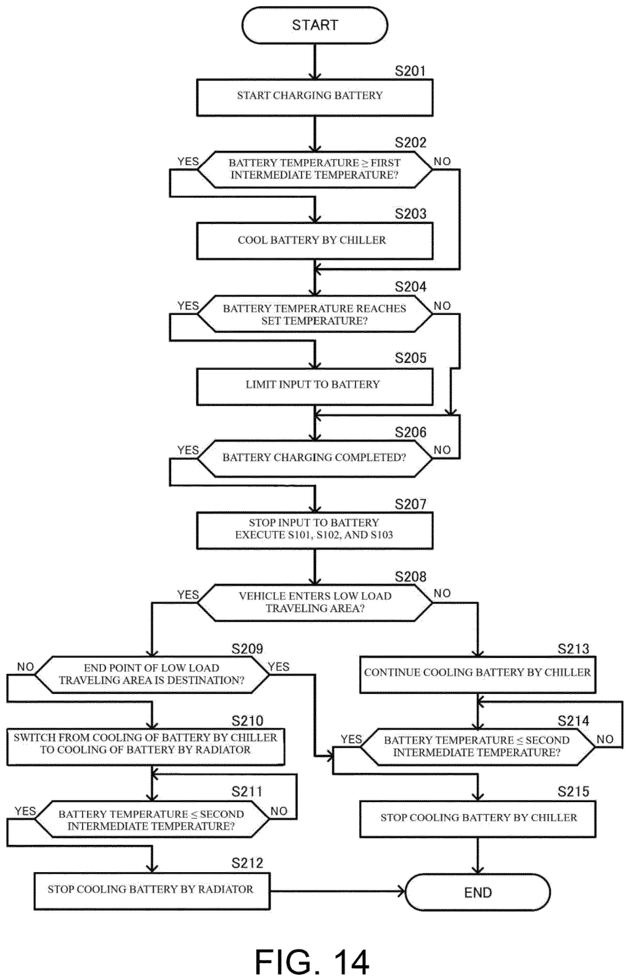

FIG. 14 is a flowchart (S201 to S215) when the battery 1 is charged and then the vehicle travels in the control system for an electric vehicle according to the present embodiment.

Here, cooling is performed when the temperature of the battery 1 becomes equal to or higher than the first intermediate temperature, and then the cooling is stopped when the temperature of the battery 1 becomes equal to or lower than the second intermediate temperature (T_{mid2}). The battery 1 is cooled by the chiller 25 or the radiator 24, but when the temperature of the outside air is lower than a threshold temperature, the battery 1 is cooled by the radiator 24, and when the temperature of the outside air is equal to or higher than the threshold temperature, the battery 1 is cooled by the chiller 25. The threshold temperature is set to be lower as the load on the battery 1 predicted from the load transition (travel route information) increases, and conversely, is set to be higher as the load on the battery 1 predicted from the load transition (travel route information) decreases. Here, a magnitude of the load is predicted based on, for example, information (load transition) on the traffic ahead of the vehicle 100 by a predetermined monitoring distance (for example, 10 [km]) or information (load transition) on a gradient of a road ahead of the vehicle 100 by the monitoring distance. It is assumed that the threshold temperature when the load on the battery 1 is a high load is lower than the second intermediate temperature (T_{mid2}) and the threshold temperature when the load on the battery 1 is a low load is higher than the set temperature (T₁).

In step S201, the battery controller 22 detects that the charger (charging plug) of the charging point has been inserted into the charging plug socket disposed in the vehicle 100, and starts charging the battery 1.

In step S202, the EV controller 21 determines whether the temperature of the battery 1 increases and reaches the intermediate temperature (T_{mid1}), and the process proceeds to step S203 if YES and proceeds to step S204 if NO.

In step S203, the EV controller 21 cools the battery 1 by the chiller 25 when the threshold temperature is higher than the first intermediate temperature (T_{mid1}).

In step S204, the EV controller 21 determines whether the temperature of the battery 1 has reached the set temperature (T₁), and the process proceeds to step S205 if YES and proceeds to step S206 if NO.

In step S205, the EV controller 21 (battery controller 22) limits the input to the battery 1 so that the temperature of the battery 1 does not exceed the set temperature (T₁).

In step S206, the EV controller 21 determines whether the charging of the battery 1 has been completed, that is, whether the state of charge of the battery 1 has reached the full charge, and the process proceeds to step S207 if YES and remains in step S206 if NO.

In step S207, the EV controller 21 (battery controller 22) stops the input to the battery 1, and executes step S101, step S102, and step S103 illustrated in FIG. 6.

In step S208, the EV controller 21 determines whether the vehicle 100 enters the low load travel route after the charging point, and the process proceeds to step S209 if YES and proceeds to step S213 if NO.

In step S209, the EV controller 21 determines whether the end point of the low load travel route is the destination of the vehicle 100, and the process proceeds to step S210 if YES and proceeds to step S215 if NO.

In step S210, the EV controller 21 sets the threshold temperature to a temperature corresponding to the low load (for example, a temperature higher than the set temperature (T1)) when the load on the battery 1 shifts from the high load state to the low load state due to the vehicle 100 entering the low load travel route. Since the threshold temperature is higher than the set temperature (T_{mid1}), the EV controller 21 switches from the cooling of the battery 1 by the chiller 25 to the cooling of the battery 1 by the radiator 24.

In step S211, the EV controller 21 determines whether the temperature of the battery 1 is equal to or lower than the second intermediate temperature (T_{mid2}), and the process proceeds to step S212 if YES and remains in step S211 if NO.

In step S212, the EV controller 21 stops cooling the battery 1 by the radiator 24. In this case, a second valve is closed to stop the circulation of the refrigerant between the radiator 24 and the battery 1. The radiator 24 is driven until the entire system of the vehicle 100 stops.

In step S213, since the threshold temperature is lower than the second intermediate temperature (T_{mid2}), the EV controller 21 continues cooling the battery 1 by the chiller 25.

In step S214, the EV controller 21 determines whether the temperature of the battery 1 is equal to or lower than the second intermediate temperature, and the process proceeds to step S215 if YES and proceeds to step S214 if NO.

In step S215, the EV controller 21 stops cooling the battery 1 by the chiller 25. In this case, the compressor of the chiller 25 is stopped.

In the above flowchart, the battery 1 is charged in steps S201 to S206, but the state of the vehicle 100 before step S208 is not particularly limited, and the present invention can also be applied to the control (step S208 to step S215) for entering the low load travel route after traveling on the high load output travel route or the regenerative braking travel route.

### [Seventh Time Chart]

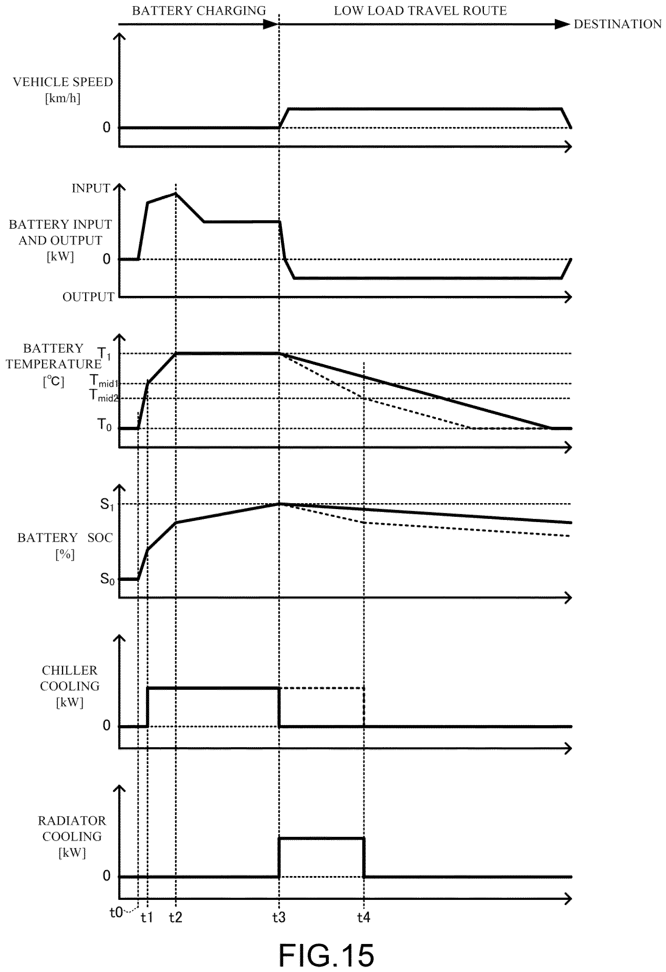

FIG. 15 is a time chart when the vehicle 100 travels on the low load travel route and arrives at a destination after the battery 1 is charged in the control system for an electric vehicle according to the present embodiment.

Before time t0, the temperature of the battery 1 is, for example, an initial temperature close to an outside air temperature (T₀: a temperature lower than the second intermediate temperature (T_{mid2})), the state of charge of the battery 1 is an initial value (value smaller than the state of charge at the time of full charge), and the vehicle 100 is stopped at the charging point.

When the EV controller 21 (battery controller 22) starts charging the battery 1 at time t0, the input to the battery 1, the temperature of the battery 1, and the state of charge (SOC) of the battery 1 increase.

At time t1, since the threshold temperature is set to a value lower than the second intermediate temperature (T_{mid2}), the EV controller 21 starts cooling the battery 1 by the chiller 25 when the temperature of the battery 1 reaches the first intermediate temperature (T_{mid1}).

At time t2, when the temperature of the battery 1 reaches the set temperature (T₁), the EV controller 21 (battery controller 22) limits the input to the battery 1.

Between time t0 and time t3, before time t0 (before charging), and immediately after the vehicle 100 starts traveling after time t3 (immediately after charging), the EV controller 21 predicts whether the vehicle 100 travels on the low load travel route after the battery 1 is charged and the end point thereof is the destination based on the information on the travel route or the like.

At time t3, when the state of charge of the battery 1 reaches the full charge, the EV controller 21 (battery controller 22) stops the input to the battery 1 and completes the charging. At this time, when the vehicle 100 travels on the low load travel route, the threshold temperature is set to a temperature higher than the set temperature (T₁), and thus the cooling of the battery 1 by the chiller 25 is stopped and switched to the cooling of the battery 1 by the radiator 24. Further, when the end point of the low load travel route is the destination, the chiller 25 does not cool the battery 1 and the radiator 24 does not cool the battery 1. In this case, the temperature of the battery 1 (solid line) monotonically decreases to the initial temperature (T₀) after time t3.

When the end point of the low load travel route is not the destination, the battery 1 is cooled by the radiator 24, and the temperature (dashed line) of the battery 1 decreases at a faster rate than the temperature (solid line) of the battery 1.

At time t4, when the temperature of the battery 1 reaches the second intermediate temperature (T_{mid2}), the cooling of the battery 1 by the radiator 24 is stopped, and thereafter, the temperature of the battery 1 monotonically decreases to the initial temperature (T₀).

When the vehicle 100 travels on the high load output travel route after time t3, the cooling of the battery 1 is continued by the chiller 25 even after time t3, and when the temperature of the battery 1 becomes equal to or lower than the second intermediate temperature (T_{mid2}), the cooling of the battery 1 by the chiller 25 is stopped.

Thus, when the battery 1 provides the power for the compressor of the chiller 25, between time t3 and time t4, the state of charge (dashed line) of the battery 1 experiences a greater decrease than the state of charge (dashed line) of the battery 1 when the compressor is stopped at time t3, by an amount of the power supplied to the compressor.

Since the compressor is stopped at time t4, the state of charge (dashed line) of the battery 1 decreases similarly to the state of charge (solid line) of the battery 1, but the state of charge (dashed line) of the battery 1 never becomes higher than the state of charge (solid line) of the battery 1.

As described above, in a case where it is predicted that the vehicle travels on the low load travel route after the battery 1 is charged, the power consumption of the battery 1 can be reduced by stopping the cooling of the battery 1 by the chiller 25 when the charging of the battery 1 is completed.

The time chart describes the case where the vehicle 100 travels on the low load travel route after the battery 1 is charged, and the end point of the low load travel route is the destination of the vehicle 100. However, the present invention can also be applied to the temperature control of the battery 1 when the vehicle 100 travels on the high load output travel route or the regenerative braking travel route and then enters the low load travel route (time t3) and the end point of the low load travel route is the destination of the vehicle 100.

### [Effects of Present Embodiment]

In the control method for an electric vehicle according to the present embodiment, the electric vehicle performs power transfer between a drive motor (motor 4) and the battery 1 and limits charge/discharge power of the battery 1 when a temperature of the battery 1 reaches a predetermined upper limit temperature (Tₘₐₓ) or is lower than a lower limit temperature (Tₘᵢₙ) lower than the upper limit temperature (Tₘₐₓ), and the control method includes: calculating a load transition representing a change in a load on the battery 1 when the vehicle 100 travels on a travel route from a current location to a destination of the vehicle 100, by estimating at least, from the travel route, a low load travel route on which the vehicle 100 travels in a state in which the load on the battery 1 is a low load and a high load travel route on which the vehicle 100 travels in a state in which the load is a high load greater than the low load; calculating a temperature transition of the battery 1 based on the load transition and a current temperature of the battery 1; heating the battery 1 before the load becomes the high load state in a case where it is predicted that the temperature of the battery 1 is lower than the lower limit temperature (Tₘᵢₙ) when the load shifts from the low load state to the high load state; and cooling the battery 1 before the load becomes the high load state in a case where it is predicted that the temperature of the battery 1 reaches the upper limit temperature when the load is in the high load state.

According to the above method, the input and output shortages of the battery 1 when the load of the battery 1 shifts from the low load state to the high load state in a state in which the temperature of the battery 1 is lower than the lower limit temperature (Tₘᵢₙ) can be reduced by heating the battery 1 before the load on the battery 1 shifts to the high load state, and the input and output shortages of the battery 1 due to the temperature of the battery 1 reaching the upper limit temperature (Tₘₐₓ) when the battery 1 is in the high load state can be reduced by cooling the battery 1 before the load on the battery 1 shifts to the high load state. Therefore, it is possible to reduce the input and output shortages when a high load is required for the battery 1.

In the present embodiment, the battery 1 is not heated when it is predicted that the temperature of the battery 1 is lower than the lower limit temperature (Tₘᵢₙ) and the load on the battery 1 does not shift to the high load state thereafter, and the battery 1 is not cooled when it is predicted that the temperature of the battery 1 is higher than the lower limit temperature (Tₘᵢₙ) and the load on the battery 1 does not shift to the high load state thereafter.

According to the above method, even in the case where the input and the output of the battery 1 are limited when the load on the battery 1 is in the high load state, it is not necessary to heat or cool the battery 1 when the load on the battery 1 is not a high load, and thus the power consumption can be reduced accordingly.

In the present embodiment, a past low load travel route and a past high load travel route calculated using map information representing the travel route from the current location to the destination of the vehicle 100 and past map information having the same travel route are extracted as a current low load travel route and a current high load travel route.

According to the above method, the low load travel route and the high load travel route can be estimated by a simple method while reducing a processing load (of the EV controller 21).

In the present embodiment, the high load travel route includes a high load output travel route in which the battery 1 supplies power to the drive motor (motor 4), and the low load travel route and the high load output travel route are estimated from map information representing the travel route from the current location to the destination of the vehicle 100.

According to the above method, when it is known that a road state from the departure location to the destination of the vehicle 100 is monotonic, it is possible to easily estimate the low load travel route and the high load output travel route without using the map information.

In the present embodiment, the map information includes information on a location of a road constituting the travel route, information on a gradient of the road, and information on a predicted vehicle speed of the road, and in the map information, a portion where the road having an uphill gradient continues for a predetermined distance or more and a portion where the predicted vehicle speed is a predetermined speed or more are estimated to be the high load output travel route.

According to the above method, the high load output travel route can be estimated with high accuracy based on the map information.

In the present embodiment, the high load travel route includes a high load output travel route in which the battery 1 supplies power to the drive motor (motor 4), and the low load travel route and the high load output travel route are estimated based on the load at the current location or the load from a departure location to the current location of the vehicle 100.

According to the above method, when it is known that a road state from the departure location to the destination of the vehicle 100 is monotonic, it is possible to easily estimate the low load travel route and the high load output travel route without using the map information.

In the present embodiment, the high load travel route includes a regenerative braking travel route in which the vehicle 100 is braked while regenerative power is supplied from the drive motor (motor 4) to the battery 1, the battery 1 is heated before the vehicle 100 enters the regenerative braking travel route in a case where the temperature of the battery 1 is lower than the lower limit temperature (Tₘᵢₙ) when the vehicle 100 enters the regenerative braking travel route, and the battery 1 is cooled before the vehicle 100 enters the regenerative braking travel route when it is predicted that the temperature of the battery 1 reaches the upper limit temperature (Tₘₐₓ) while the vehicle 100 is traveling on the regenerative braking travel route.

According to the above method, the shortage of the input to the battery 1 when the vehicle 100 enters the regenerative braking travel route in a state in which the temperature of the battery 1 is lower than the lower limit temperature (Tₘᵢₙ) can be reduced by heating the battery 1 before the vehicle 100 enters the regenerative braking travel route, and the shortage of the input to the battery 1 due to the temperature of the battery 1 reaching the upper limit temperature (Tₘₐₓ) while the vehicle 100 is traveling on the regenerative braking travel route can be reduced by cooling the battery 1 before the vehicle 100 enters the regenerative braking travel route. Therefore, it is possible to reduce the input shortage when an input of regenerative power to the battery 1 is required.

In the present embodiment, the regenerative braking travel route is estimated from map information representing the travel route from the current location to the destination of the vehicle 100, the map information includes information on a location of a road constituting the travel route, information on a gradient of the road, and information on a predicted vehicle speed of the road, and in the map information, a portion where the road having a downhill gradient continues for a predetermined distance or more, or a portion where the predicted vehicle speed shifts from a high area to a low area by a predetermined speed difference or more is estimated to be the regenerative braking travel route.

According to the above method, the regenerative braking travel route can be estimated with high accuracy using the map information.

In the present embodiment, in a case where the temperature of the battery 1 before the vehicle 100 enters the regenerative braking travel route is lower than the lower limit temperature (Tₘᵢₙ), when it is predicted that a total amount of power (total battery heating power) required to heat the temperature of the battery 1 to the lower limit temperature (Tₘᵢₙ) is larger than a difference (increase in total regenerative power) obtained by subtracting a total amount of the regenerative power obtained when the vehicle 100 travels on the regenerative braking travel route without heating the battery 1 before the vehicle 100 enters the regenerative braking travel route, from a total amount of the regenerative power obtained when the vehicle 100 travels on the regenerative braking travel route after the temperature of the battery 1 is heated to the lower limit temperature (Tₘᵢₙ), the battery 1 is not heated before the vehicle 100 enters the regenerative braking travel route, and in a case where the temperature of the battery 1 before the vehicle 100 enters the regenerative braking travel route is higher than the lower limit temperature (Tₘᵢₙ), when it is predicted that a total amount of power (total battery cooling power) required to cool the temperature of the battery 1 to the lower limit temperature (Tₘᵢₙ) is larger than a difference (increase in total regenerative power) obtained by subtracting a total amount of the regenerative power obtained when the vehicle 100 travels on the regenerative braking travel route without cooling the battery 1 before the vehicle 100 enters the regenerative braking travel route, from a total amount of the regenerative power obtained when the vehicle 100 travels on the regenerative braking travel route after the temperature of the battery 1 is cooled to the lower limit temperature (Tₘᵢₙ), the battery is not cooled before the vehicle enters the regenerative braking travel route.

According to the above method, it is possible to avoid a state in which the state of charge of the battery 1 after the vehicle 100 passes through the regenerative braking travel route is smaller than the state of charge of the battery 1 before the vehicle 100 enters the regenerative braking travel route.

In the present embodiment, in a case where the battery 1 provides power required to cool the battery 1 and the charge power of the battery 1 is limited when a state of charge (SOC) of the battery 1 reaches a predetermined upper limit value (Sₘₐₓ), the battery 1 is cooled before the vehicle 100 enters the regenerative braking travel route when it is predicted that the state of charge (SOC) of the battery 1 reaches the upper limit value (Sₘₐₓ) while the vehicle 100 is traveling on the regenerative braking travel route.

According to the above method, the battery 1 is discharged to supply power for cooling the battery 1 before the vehicle 100 enters the regenerative braking travel route, thereby reducing the shortage of the input to the battery 1, that is, the shortage of the regenerative braking. Further, the battery 1 is cooled before the vehicle 100 enters the regenerative braking travel route, and thus it is possible to reduce the frequency at which the temperature of the battery 1 reaches the upper limit temperature (Tₘₐₓ) while the vehicle 100 is traveling on the regenerative braking travel route.

In the present embodiment, the battery 1 is able to be heated and cooled when a state of charge of the battery 1 is equal to or larger than a predetermined lower limit value (Sₘᵢₙ), and the battery 1 is unable to be heated and cooled when the state of charge is smaller than the lower limit value (Sₘᵢₙ).

According to the above method, it is possible to prevent depletion of the battery 1 during traveling of the vehicle 100.

In the present embodiment, the control method further includes: estimating a charging point at which the battery 1 is able to be charged on the travel route; heating the battery 1 before the vehicle 100 arrives at the charging point in a case where it is predicted that the temperature of the battery 1 is lower than the lower limit temperature (Tₘᵢₙ) when the vehicle 100 arrives at the charging point and charges the battery 1; and cooling the battery 1 before the vehicle 100 arrives at the charging point when it is predicted that the temperature of the battery 1 reaches the upper limit temperature (Tₘₐₓ, set temperature (T₁)) while the battery 1 is being charged at the charging point.

According to the above method, it is possible to reduce the input and output shortages of the battery 1 when the charging of the battery 1 is started in a state in which the temperature of the battery 1 is lower than the lower limit temperature (Tₘᵢₙ) by heating the battery 1 before the vehicle 100 arrives at the charging point, and it is possible to reduce the input and output shortages of the battery 1 due to the temperature of the battery 1 reaching the upper limit temperature (Tₘₐₓ, set temperature (T₁)) during the charging of the battery 1 by cooling the battery 1 before the vehicle 100 arrives at the charging point. Therefore, it is possible to reduce the input shortage when an input of the charge power to the battery 1 is required, and to shorten the charging time.

In the present embodiment, the low load travel route and the charging point are estimated from map information representing the travel route from the current location to the destination of the vehicle 100.

According to the above method, the low load travel route and the charging point can be reliably extracted from the map information.

In the present embodiment, in a case where the battery 1 is cooled when the temperature of the battery 1 is equal to or higher than an intermediate temperature (T_{mid}, first intermediate temperature (T_{mid1})) between the upper limit temperature (Tₘₐₓ, set temperature (T₁)) and the lower limit temperature (Tₘᵢₙ), and the cooling of the battery 1 is stopped when the temperature of the battery 1 is lower than the intermediate temperature (T_{mid}, second intermediate temperature (T_{mid2})), the cooling of the battery 1 is stopped when the vehicle 100 starts traveling on the low load travel route in a state where the temperature of the battery 1 is higher than the intermediate temperature (T_{mid}, second intermediate temperature (T_{mid2})) and it is predicted that an end point of the low load travel route is the destination.

According to the above method, since the cooling of the battery 1 is stopped by determining that the rapid temperature increase does not occur again, it is possible to reduce the power consumption as compared with the case where the cooling of the battery 1 is stopped when the temperature becomes lower than the predetermined intermediate temperature (T_{mid}, second intermediate temperature (T_{mid2})).

In the present embodiment, in a case where the chiller 25 and the radiator 24 configured to cool the battery 1 are mounted on the vehicle 100, the battery 1 is cooled by the chiller 25 when a temperature of an outside air is equal to or higher than a predetermined threshold temperature, and the battery 1 is cooled by the radiator 24 when the temperature of the outside air is lower than the threshold temperature, and the threshold temperature is set to be lower as the load predicted from the load transition becomes larger, and the threshold temperature is set to be higher as the load predicted from the load transition becomes smaller.

The power consumption of the compressor (not illustrated) of the chiller 25 is higher than the power consumption of the circulation pump (not illustrated) that circulates a refrigerant through the radiator 24. Therefore, according to the above method, the radiator 24 can cool the battery 1 in preference to the chiller 25 when the load is low, thereby reducing the power consumption of the entire system.

In a control system for an electric vehicle according to the present embodiment, the electric vehicle includes a drive motor (motor 4), the battery 1 configured to perform power transfer with the drive motor (motor 4), and a control unit (EV controller 21) configured to limit charge/discharge power of the battery 1 when a temperature of the battery 1 reaches a predetermined upper limit temperature (Tₘₐₓ) or when the temperature of the battery 1 is lower than a predetermined lower limit temperature (Tₘᵢₙ) lower than the upper limit temperature (Tₘₐₓ), in which the control unit (EV controller 21) is configured to calculate a load transition representing a change in a load on the battery 1 when the vehicle 100 travels on a travel route from a current location to a destination of the vehicle 100, by estimating at least, from the travel route, a low load travel route on which the vehicle 100 travels in a state in which the load on the battery 1 is a low load and a high load travel route on which the vehicle 100 travels in a state in which the load is a high load greater than the low load; calculate a temperature transition of the battery 1 based on the load transition and a current temperature of the battery 1; heat the battery 1 before the load becomes the high load state in a case where it is predicted that the temperature of the battery 1 is lower than the lower limit temperature (Tₘᵢₙ) when the load shifts from the low load state to the high load state; and cool the battery 1 before the load becomes the high load state in a case where it is predicted that the temperature of the battery 1 reaches the upper limit temperature (Tₘₐₓ) when the load is in the high load state.

With the above configuration, the input and output shortages of the battery 1 when the load of the battery 1 shifts from the low load state to the high load state in a state in which the temperature of the battery 1 is lower than the lower limit temperature (Tₘᵢₙ) can be reduced by heating the battery 1 before the load on the battery 1 shifts to the high load state, and the input and output shortages of the battery 1 due to the temperature of the battery 1 reaching the upper limit temperature (Tₘₐₓ) when the battery 1 is in the high load state can be reduced by cooling the battery 1 before the load on the battery 1 shifts to the high load state. Therefore, it is possible to reduce the input and output shortages when a high load is required for the battery 1.

Although the embodiments of the present invention have been described above, the above embodiments merely exemplify a part of application examples of the present invention and do not intend to limit the technical scope of the present invention to the specific configurations of the above embodiments. The above embodiments can be combined as appropriate.

## Claims

1. A control method for an electric vehicle, the electric vehicle performing power transfer between a drive motor and a battery and limiting charge/discharge power of the battery when a temperature of the battery reaches a predetermined upper limit temperature or is lower than a lower limit temperature lower than the upper limit temperature, the control method comprising:
calculating a load transition representing a change in a load on the battery when the vehicle travels on a travel route from a current location to a destination of the vehicle, by estimating at least, from the travel route, a low load travel route on which the vehicle travels in a state in which the load on the battery is a low load and a high load travel route on which the vehicle travels in a state in which the load is a high load greater than the low load;
calculating a temperature transition of the battery based on the load transition and a current temperature of the battery;
heating the battery before the load becomes the high load state in a case where it is predicted that the temperature of the battery is lower than the lower limit temperature when the load shifts from the low load state to the high load state; and
cooling the battery before the load becomes the high load state in a case where it is predicted that the temperature of the battery reaches the upper limit temperature when the load is in the high load state.

2. The control method for an electric vehicle according to claim 1, wherein the battery is not heated when it is predicted that the temperature of the battery is lower than the lower limit temperature and the load on the battery does not shift to the high load state thereafter, and
the battery is not cooled when it is predicted that the temperature of the battery is higher than the lower limit temperature and the load on the battery does not shift to the high load state thereafter.

3. The control method for an electric vehicle according to claim 1, wherein a past low load travel route and a past high load travel route calculated using map information representing the travel route from the current location to the destination of the vehicle and past map information having the same travel route are extracted as a current low load travel route and a current high load travel route.

4. The control method for an electric vehicle according to claim 1, wherein the high load travel route includes a high load output travel route in which the battery supplies power to the drive motor, and
the low load travel route and the high load output travel route are estimated from map information representing the travel route from the current location to the destination of the vehicle.

5. The control method for an electric vehicle according to claim 4, wherein the map information includes information on a location of a road constituting the travel route, information on a gradient of the road, and information on a predicted vehicle speed of the road, and
in the map information, a portion where the road having an uphill gradient continues for a predetermined distance or more and a portion where the predicted vehicle speed is a predetermined speed or more are estimated to be the high load output travel route.

6. The control method for an electric vehicle according to claim 1, wherein the high load travel route includes a high load output travel route in which the battery supplies power to the drive motor, and
the low load travel route and the high load output travel route are estimated based on the load at the current location or the load from a departure location to the current location of the vehicle.

7. The control method for an electric vehicle according to claim 1, wherein the high load travel route includes a regenerative braking travel route in which the vehicle is braked while regenerative power is supplied from the drive motor to the battery,
the battery is heated before the vehicle enters the regenerative braking travel route in a case where the temperature of the battery is lower than the lower limit temperature when the vehicle enters the regenerative braking travel route, and
the battery is cooled before the vehicle enters the regenerative braking travel route when it is predicted that the temperature of the battery reaches the upper limit temperature while the vehicle is traveling on the regenerative braking travel route.

8. The control method for an electric vehicle according to claim 7, wherein the regenerative braking travel route is estimated from map information representing the travel route from the current location to the destination of the vehicle,
the map information includes information on a location of a road constituting the travel route, information on a gradient of the road, and information on a predicted vehicle speed of the road, and
in the map information, a portion where the road having a downhill gradient continues for a predetermined distance or more, or a portion where the predicted vehicle speed shifts from a high area to a low area by a predetermined speed difference or more is estimated to be the regenerative braking travel route.

9. The control method for an electric vehicle according to claim 7, wherein in a case where the temperature of the battery before the vehicle enters the regenerative braking travel route is lower than the lower limit temperature, when it is predicted that a total amount of power required to heat the temperature of the battery to the lower limit temperature is larger than a difference obtained by subtracting a total amount of the regenerative power obtained when the vehicle travels on the regenerative braking travel route without heating the battery before the vehicle enters the regenerative braking travel route, from a total amount of the regenerative power obtained when the vehicle travels on the regenerative braking travel route after the temperature of the battery is heated to the lower limit temperature, the battery is not heated before the vehicle enters the regenerative braking travel route, and
in a case where the temperature of the battery before the vehicle enters the regenerative braking travel route is higher than the lower limit temperature, when it is predicted that a total amount of power required to cool the temperature of the battery to the lower limit temperature is larger than a difference obtained by subtracting a total amount of the regenerative power obtained when the vehicle travels on the regenerative braking travel route without cooling the battery before the vehicle enters the regenerative braking travel route, from a total amount of the regenerative power obtained when the vehicle travels on the regenerative braking travel route after the temperature of the battery is cooled to the lower limit temperature, the battery is not cooled before the vehicle enters the regenerative braking travel route.

10. The control method for an electric vehicle according to claim 7, wherein in a case where the battery provides power required to cool the battery and the charge power of the battery is limited when a state of charge of the battery reaches a predetermined upper limit value,
the battery is cooled before the vehicle enters the regenerative braking travel route when it is predicted that the state of charge of the battery reaches the upper limit value while the vehicle is traveling on the regenerative braking travel route.

11. The control method for an electric vehicle according to claim 1, wherein the battery is able to be heated and cooled when a state of charge of the battery is equal to or larger than a predetermined lower limit value, and
the battery is unable to be heated and cooled when the state of charge is smaller than the lower limit value.

12. The control method for an electric vehicle according to claim 1, the control method further comprising:
estimating a charging point at which the battery is able to be charged on the travel route;
heating the battery before the vehicle arrives at the charging point in a case where it is predicted that the temperature of the battery is lower than the lower limit temperature when the vehicle arrives at the charging point and charges the battery; and
cooling the battery before the vehicle arrives at the charging point when it is predicted that the temperature of the battery reaches the upper limit temperature while the battery is being charged at the charging point.

13. The control method for an electric vehicle according to claim 12, wherein the charging point is estimated from map information representing the travel route from the current location to the destination of the vehicle.

14. The control method for an electric vehicle according to claim 1, wherein in a case where the battery is cooled when the temperature of the battery is equal to or higher than an intermediate temperature between the upper limit temperature and the lower limit temperature, and the cooling of the battery is stopped when the temperature of the battery is lower than the intermediate temperature,
the cooling of the battery is stopped when the vehicle starts traveling on the low load travel route in a state where the temperature of the battery is higher than the intermediate temperature and it is predicted that an end point of the low load travel route is the destination.

15. The control method for an electric vehicle according to claim 1, wherein in a case where a chiller and a radiator configured to cool the battery are mounted on the vehicle,
the battery is cooled by the chiller when a temperature of an outside air is equal to or higher than a predetermined threshold temperature, and the battery is cooled by the radiator when the temperature of the outside air is lower than the threshold temperature, and
the threshold temperature is set to be lower as the load predicted from the load transition becomes larger, and the threshold temperature is set to be higher as the load predicted from the load transition becomes smaller.

16. A control system for an electric vehicle, the electric vehicle including a drive motor,
a battery configured to perform power transfer with the drive motor, and
a control unit configured to limit charge/discharge power of the battery when a temperature of the battery reaches a predetermined upper limit temperature or when the temperature of the battery is lower than a predetermined lower limit temperature lower than the upper limit temperature, wherein
the control unit is configured to calculate a load transition representing a change in a load on the battery when the vehicle travels on a travel route from a current location to a destination of the vehicle by estimating at least, from the travel route, a low load travel route on which the vehicle travels in a state in which the load on the battery is a low load and a high load travel route on which the vehicle travels in a state in which the load is a high load greater than the low load,
calculate a temperature transition of the battery based on the load transition and a current temperature of the battery,
heat the battery before the load becomes the high load state in a case where it is predicted that the temperature of the battery is lower than the lower limit temperature when the load shifts from the low load state to the high load state, and
cool the battery before the load becomes the high load state in a case where it is predicted that the temperature of the battery reaches the upper limit temperature when the load is in the high load state.
